(19) Europäisches Patentamt
European Patent Office
Office européen des brevets

(11) **EP 4 316 819 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
***B32B 27/00*** (2006.01)    ***B32B 27/18*** (2006.01)

(21) Application number: **22780749.2**

(52) Cooperative Patent Classification (CPC):
**B32B 27/00; B32B 27/18; C08J 5/00; C08J 7/04;
E04F 13/08; E04F 13/18**

(22) Date of filing: **28.03.2022**

(86) International application number:
**PCT/JP2022/015014**

(87) International publication number:
**WO 2022/210538 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021057716**

(71) Applicant: **Dai Nippon Printing Co., Ltd.
Tokyo 162-8001 (JP)**

(72) Inventors:
• **NISHIGAKI, Ryosuke
Tokyo 162-8001 (JP)**
• **NISHINE, Shota
Tokyo 162-8001 (JP)**
• **SAKURAI, Reiko
Tokyo 162-8001 (JP)**

(74) Representative: **Müller-Boré & Partner
Patentanwälte PartG mbB
Friedenheimer Brücke 21
80639 München (DE)**

(54) **MATTE ARTICLE**

(57)    Provided is a matte article that has excellent matte effect visibility and texture as well as an excellent rough touch. A matte article having, on at least a part of a surface thereof, a surface shape with an Spc (arithmetic mean curvature of protrusion vertexes) of more than 4000 mm$^{-1}$ as specified in JIS B0601:2013 and an Rsm (average length of curve elements) of 30 $\mu$m or more as specified in JIS B0601:2013.

[Fig. 3]

**Description**

Technical Field

The present disclosure relates to a matte article.

Background Art

Conventionally, so-called decorative materials or sheets have been used as articles to decorate and protect surfaces of, for example, interior members of buildings such as, walls, ceilings, and floors; exterior members such as exterior walls, eaves ceilings, roofs, fences, and rails; fixture or fitting members such as window frames, doors, door frames, railings, baseboards, trims, and moldings; general furniture such as chests, shelves, and desks; kitchen furniture such as dining tables and sinks; surface decorative boards such as cabinets for home appliances and OA equipment; or vehicle interior or exterior members. For example, such decorative members used have a surface layer with a desired function.

In order to improve the design of decorative materials used for these applications, a matte effect (matting effect) is commonly used as a technique to improve the texture of decorative materials. As a decorative material using the matte effect, for example, PTL1 discloses a decorative sheet having a pattern layer and a concealed layer on one side of a base sheet and a gloss adjustment layer (a matte layer, a gloss layer) on the other side. In the decorative sheet of PTL1, the difference in gloss between the matte layer and the gloss layer of the gloss adjustment layer can cause a design effect so that the pattern layer and the concealed layer stand out. In the Example, the matte layer provided over the entire surfaces is created using a matte ink obtained by adding the total 50 parts by weight of matting agent, namely 10 parts by weight of spherical alumina and 40 parts by weight of calcium carbonate, per 100 parts by weight of resin.

In addition, PTL2 discloses a decorative material including, on a base material, a printing layer and a transparent resin layer in sequence, and an embossed pattern on the top surface of the transparent resin layer.

Citation List

Patent Literature

PTL1: JP 2000-062081 A

PTL2: JP 2011-073207 A

Summary of Invention

Technical Problem

Representative examples of the method to improve the texture by matte effect (matting effect) include: a method using a matting agent (also called a "matte agent") to achieve a matte effect by its own light diffusion effect, as in the above-mentioned PTL1; or a method to form an uneven shape on the topmost surface by embossing, as in the above-mentioned PTL2.

Meanwhile, when a matting agent is used as in PTL1, the amount used should be increased to achieve a better matte effect. As the amount of the matting agent used increases, the surface properties tend to deteriorate due to the following reasons: the matting agent drops out of a coating film and damages the coating film, resulting in reduced scratch resistance; scratches are also more visible due to change in gloss caused by lack of matting agent; or contaminants infiltrate a micro-gap at the interface between the matting agent and the resin and in addition, the contaminants are absorbed onto the matting agent itself, resulting in reduced contamination resistance. On the other hand, the matte effect tends to decrease when the amount used is reduced in order to suppress the deterioration of surface properties. There is an antinomic relationship between the surface properties and the matte effect. Therefore, there is a limit to the matting effect while using a matting agent.

When the embossing process is used as in PTL2, preparation of an embossing plate is not easy as it requires a great deal of time and effort, and furthermore, it is necessary to prepare the plate for each desired pattern. Therefore, it cannot be said that this method can sufficiently respond to the diversity of customer demands.

By the way, the diversity of customer demands is large, and not only the visual matte effect as described above, but also tactile expression is required. For example, when using a matting agent as in the above PTL1, increasing the amount used may cause the contours of the matting agent to be exposed on the surface of the decorative sheet, resulting in somewhat coarse surface feel, "rough" feel. When embossing is used as in PTL2, tactile sensation may develop due to the uneven shape of the surface formed by the embossing plate. However, in either case, the focus is not on the tactile expression, and it cannot be said that the tactile sensation is sufficient in terms of touch. That is, conventional decorative sheets or materials cannot be said to provide both excellent matte effect and tactile sensation. The present disclosure focuses on a "rough" touch among the tactile sensations.

The present disclosure addresses the problem of providing a matte article with excellent matte effect visibility and texture and with an excellent rough touch.

Solution to Problem

In order to solve the above problems, the present disclosure provides the following matte articles.

[1] A matte article comprising, on at least a part of a surface thereof, a surface shape with an Spc (arithmetic mean curvature of protrusion vertexes) of more than 4000 mm$^{-1}$ as specified in JIS B0601:2013 and an Rsm (average length of curve elements) of 30 $\mu$m or more as specified in JIS B0601:2013.

[2] The matte article according to [1], wherein the surface shape has an Rz (maximum height), which is a peak and height parameter of a contour curve as specified in JIS B0601:2013, of 8.00 $\mu$m or more and 30.00 $\mu$m or less.

[3] The matte article according to [1] or [2], wherein the surface shape has an Ra (arithmetic mean roughness), which is a parameter of a contour curve in a height direction as specified in JIS B0601:2013, of 1.00 $\mu$m or more and 5.50 $\mu$m or less.

[4] The matte article according to any one of [1] to [3], comprising a matte layer, wherein the surface shape is formed on a surface of the matte layer.

[5] The matte article according to any one of [1] to [4], wherein the surface of the matte layer forming the surface shape has an uneven shape composed of irregular wrinkles.

[6] The matte article according to [5], wherein the irregular wrinkles are composed of a plurality of convex portions formed by a plurality of streak-shaped protrusions and a plurality of concave portions formed by being surrounded by the plurality of streak-shaped protrusions.

[7] The matte article according to any one of [4] to [6], wherein the matte layer is made of a cured resin composition comprising a resin and a wrinkle formation stabilizer; the wrinkle formation stabilizer has an average particle size, an upper limit of which is 100% or less of a thickness of the matte layer or 30 $\mu$m or less, whichever is smaller; and the wrinkle formation stabilizer is comprised in an amount of 0.5 parts by mass or more based on 100 parts by mass of the resin.

[8] The matte article according to any one of [1] to [7], comprising a base material.

[9] The matte article according to [8], wherein the base material is in a sheet form.

[10] The matte article according to [8] or [9], wherein the matte layer is provided over an entire surface of one side of the base material.

[11] The matte article according to any one of [1] to [10], wherein the surface shape has a 60° gloss value of 10.0 or less.

Advantageous Effects of Invention

The present disclosure makes it possible to provide a matte article with excellent matte effect visibility and texture and a rough touch.

Brief Description of Drawings

[Fig. 1] Fig. 1 is schematic diagrams each illustrating the surface shape of a matte article in the present disclosure.
[Fig. 2] Fig. 2 is schematic diagrams each illustrating the surface shape of a matte article in the present disclosure.
[Fig. 3] Fig. 3 is a schematic plan view of a matte article according to an embodiment of the present disclosure.
[Fig. 4] Fig. 4 is a cross-sectional view of a matte article according to an embodiment of the present disclosure.
[Fig. 5] Fig. 5 is a cross-sectional view of a matte article according to an embodiment of the present disclosure.
[Fig. 6] Fig. 6 is a cross-sectional view of a matte article according to an embodiment of the present disclosure.
[Fig. 7] Fig. 7 is an optical microscope image of a surface of the matte article obtained in Example 1.
[Fig. 8] Fig. 8 is an optical microscope image of a surface of the matte article obtained in Comparative Example 1.
[Fig. 9] Fig. 9 is an optical microscope image of a surface of the matte article obtained in Comparative Example 2.
[Fig. 10] Fig. 10 is an optical microscope image of a surface of the matte article obtained in Comparative Example 3.

[Fig. 11] Fig. 11 is an optical microscope image of a surface of the matte article obtained in Comparative Example 4.
[Fig. 12] Fig. 12 is an optical microscope image of a surface of the matte article obtained in Comparative Example 5.
[Fig. 13] Fig. 13 is an optical microscope image of a surface of the matte article obtained in Comparative Example 6.

Description of Embodiments

[Matte article]

Hereinbelow, an embodiment of the present disclosure (hereinafter, sometimes referred to as "the present embodiment".) will be described. Note that as used herein, the numerical values for "A or more", "B or less", and "from A to B" in terms of the numerical value range are numerical values optionally combined; and the numbers in Examples are numbers that can be used for the upper and lower limits of the numerical range.
A matte article of the present embodiment has, on at least a part of a surface thereof, a surface shape with an Spc (arithmetic mean curvature of protrusion vertexes) of more than 4000 mm$^{-1}$ as specified in JIS B0601:2013 and an Rsm (average length of curve elements) of 30 $\mu$m or more as specified in JIS B0601:2013.

[Surface shape]

The following describes the surface shape which the matte article of the present embodiment has on at least a part of a surface thereof (hereinafter, simply referred to as "surface shape").
The surface shape should have an Spc (arithmetic mean curvature of protrusion vertexes) of more than 4000 mm$^{-1}$ as specified in JIS B0601:2013 and an Rsm (average length of curve elements) of 30 $\mu$m or more as specified in JIS B0601:2013. Such a surface shape causes the matte article of the present embodiment to exhibit excellent matte effect visibility and texture (hereinafter, sometimes collectively referred to as "matte effect".), as well as tactile sensation, namely a particularly "rough" touch. While the "rough" touch is a sensual expression, the "rough" herein encompasses all tactile sensations that are generally perceived as "rough". Specifically, the term means a touch sensation felt when rough surface is touched with the belly of a finger, and also means a touch sensation like a rough feeling that is not smooth, but frayed and rough. Examples of a "rough" touch include relatively rough Fabrics such as oxford fabrics made of relatively thick yarns of 10 to 50 count (thick to moderate count yarns); and linen Fabrics made of relatively thick yarns of 10 to 50 count.

(Spc (arithmetic mean curvature of protrusion vertexes))

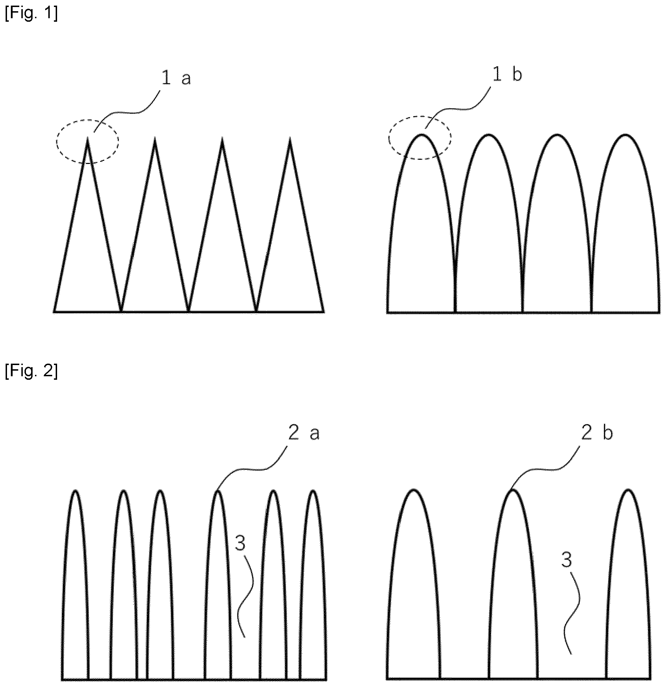

Spc (arithmetic mean curvature of protrusion vertexes) is one of the three-dimensional surface property parameters as JIS B0601:2013 above, and is an average curvature (average sharpness) of peak top tips, determined from the arithmetic mean value of curvature radii of peak tops (protrusion vertexes) in areas classified as peaks (convex portions) in a feature image included in a reference region. Thus, Spc is the reciprocal number (mm$^{-1}$) of the radius (mm).
The larger Spc, the larger the curvature of the tip (1a in Fig. 1) of the peak top (convex portion) (the curvature radius as the reciprocal number is smaller and the tip shape is sharper). On the other hand, the smaller the value of Spc, the smaller the curvature of the protrusion vertex (1b in Fig. 1) (the curvature radius as the reciprocal number is larger and the tip shape is more obtuse). In other words, the smaller the Spc, the protrusion is rounded and closer to a flat surface, resulting in an increase in gloss. Thus, in order to suppress gloss with attention to only the value of Spc, a surface shape with a large Spc (surface shape with a sharp protrusion vertex), namely, a planar shape with an Spc of more than 4000 mm$^{-1}$ is adopted to result in strong light scattering on a surface and decreased gloss.
A surface shape having a small Spc has a rounded protrusion vertex, thereby leading to soft hand feeling, whereas a large value, namely, a value of more than 4000 mm$^{-1}$ (a curvature radius of less than 0.25 mm) allows the user to feel a pointed tip shape when touched with the belly of a finger at a suitable contact frequency, and such a sensation seems to lead to a tactile sensation felt when a rough surface is touched with the belly of a finger, a tactile sensation which not is soft hand feeling, but is frayed and rough feeling, i.e., a "rough" touch. Here, if the average interval between such pointed protrusion vertexes is too small, such each pointed tip shape is not present beyond the threshold of the resolution of tactile sensation by the belly of a finger, and causes loss in pointed touch of each protrusion and leads to a smooth and soft touch. Thus, the surface shape of the matte article should satisfy, in addition to a requirement of an Spc > 4000 mm$^{-1}$, a requirement of an Rsm (average length of curve elements) $\geq$ 30 $\mu$m, corresponding to the average protrusion interval as described below.
From the viewpoint of improving the matte effect and the "rough" touch due to the interaction with Rsm (average length of curve elements) described below, the Spc is preferably 4200 mm$^{-1}$ or more, more preferably 4250 mm$^{-1}$ or more, and still more preferably 4300 mm$^{-1}$ or more, and the upper limit is preferably 7000 mm$^{-1}$ or less, preferably 6000 mm$^{-1}$ or less, more preferably 5000 mm$^{-1}$ or less, and still more preferably 4500 mm$^{-1}$ or less. Note that when the Spc is measured herein, the cut-off value is 0.8 mm.

Spc is determined as a measurement value measured using a shape analysis laser microscope on a rectangle (1024 $\mu$m × 768 $\mu$m) of any part of the surface shape of a matte article. The measurement conditions may be adjusted as needed, and for example, the conditions described in Examples can be used for the measurement. In addition, RSm (average length of curve elements), which will be described later, Rz (maximum height), and Ra (arithmetic mean roughness) may also be likewise measured.

(Rsm (average length of curve elements))

Rsm (average length of curve elements) is a transverse parameter of the contour curve, of the three-dimensional surface property parameters as specified in JIS B0601:2013 above, and is the average of the lengths of the contour curve elements with a reference length. The larger the Rsm, the smaller the number of convex portions (2a and 2b in Fig. 2) within a reference length. Thus, a surface shape having a large Rsm has sparsely present protrusion vertexes of convex portions. Thus, convex portions which are dotted, namely, an Rsm of 30 $\mu$m or more allows the user to feel a pointed tip shape when touched with the belly of a finger at a suitable contact frequency, and such a sensation seems to lead to a tactile sensation felt when a rough surface is touched with the belly of a finger, a tactile sensation which not is soft hand feeling, but is frayed and rough feeling, i.e., a "rough" touch.

A smaller Rsm results in an increased number of convex portions within a reference length. This leads to formation of many convex portions on a surface, and a precise production process is needed. Thus, the Rsm is set to 30 $\mu$m or more, thereby allowing for a simplified production process.

In the present embodiment, a larger Spc can improve the matte effect and also provide a "rough" touch, whereas a small Rsm, even if the Spc is large, results in densely present protrusion vertexes, and thus increases the area to be contacted with a finger in the case of passing of the finger across a surface, and causes expression of a soft touch feeling. Thus, the Spc (arithmetic mean curvature of protrusion vertexes) which is set to more than 4000 mm$^{-1}$ and the Rsm (average length of curve elements) which is set to 30 $\mu$m or more are considered to enable both the matte effect and "rough" touch to be satisfied at a high level.

From the viewpoint of improving the matte effect and the "rough" tough due to the interaction with the Spc, the lower limit of Rsm is preferably 32.0 $\mu$m or more, more preferably 35.0 $\mu$m or more, and still more preferably 37.5 $\mu$m or more, and the upper limit value thereof is preferably 60.0 $\mu$m or less, more preferably 50.0 $\mu$m or less, and still more preferably 40.0 $\mu$m or less. The upper limit value is preferably within the above range because a planar shape exhibits the "rough" tough and also production is not excessively difficult. Note that when the Rsm is measured herein, the cut-off value is 0.8 mm.

(Wrinkles (creases))

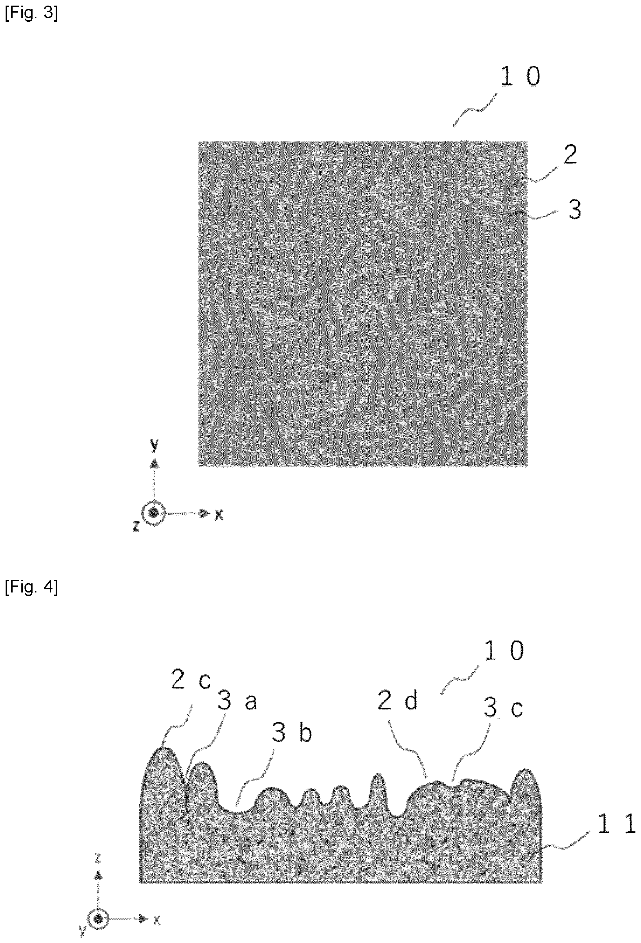

The surface shape of a matte article of the present embodiment should have a micro-wrinkle(s) (creases) visible in the plan view shown in Fig. 3 as described below. This wrinkle is preferably an irregular uneven shape. The Spc (arithmetic mean curvature of protrusion vertexes) and Rsm (average length of curve elements) of the surface shape of a matte article of the present embodiment, preferably Rz (maximum height) and Ra (arithmetic mean roughness), which are described below, are more likely to be within a specific numerical range by having micro-wrinkles (creases), and on the other hand, such micro-wrinkles (creases) are likely to be formed by having Spc (arithmetic mean curvature of protrusion vertexes) and Rsm (average length of curve elements) within a specific numerical range, and preferably Rz (maximum height) and Ra (arithmetic mean roughness) within a specific numerical range. Thus, Spc (arithmetic mean curvature of protrusion vertexes) and Rsm (average length of curve elements) are closely linked to micro-wrinkles (creases). This surface shape improves the matte effect as well as the "rough" tough.

In order to have Spc (arithmetic mean curvature of protrusion vertexes) and Rsm (average length of curve elements) within the above specific numerical rang, and preferably have the Rz (maximum height) and Ra (arithmetic mean roughness) as describe below, in the surface shape of the matte article, it is preferable that, as already mentioned;

(1) It is preferable to form a micro wrinkle structure on a surface of a matte layer. In addition, it is preferable that:
(2) the component formulation of a resin composition for forming a matte layer, especially the types of polymerizable monomers and polymerizable oligomers, the number of functional groups, the molecular weight, the presence or absence of wrinkle formation stabilizer, and the particle size and content of wrinkle-forming agent when a wrinkle formation stabilizer is used are optimized;
(3) the conditions of irradiating a resin composition for matting, especially the wavelength of light with a wavelength between 100 nm and 380 nm, which can cause curing and contraction of a surface portion of a matte layer, the cumulative light amount, and the UV light output density, and so on are optimized; and
(4) in addition to the above, the type and thickness of base material and the thickness of a matte layer, and so on are optimized. By optimizing these parameters, in the surface shape of a matte article of the present embodiment, it is easier to set the Spc (arithmetic mean curvature of protrusion vertexes) and Rsm (average length of curve elements) within the above specific numerical range, and preferably to set the Rz (maximum height) and Ra (arithmetic mean roughness) as described below within a given numerical range.

(Rz (maximum height))

In the present embodiment, the surface shape preferably has an Rz (maximum height), which is a parameter of the contour curve in the transverse direction as specified in JIS B0601:2013, of 8.00 $\mu$m or more and 30.00 $\mu$m or less.

The Rz (maximum height) is one of the peak and height parameters of the contour curve and is the sum of the height of the highest peak and the depth of the deepest valley in the contour curve with a reference length. The larger the value of Rz (maximum height), the larger (higher) convex portions exist in terms of the valley (concave portion), thus the Rz is an indicator that indicates the trend in which such convex portions exist. Thus, when the Rz (maximum height) is 8.00 $\mu$m or more and 30.00 $\mu$m or less for the surface shape that satisfies the above Spc (arithmetic mean curvature of protrusion vertexes) and Rsm (average length of curve elements), the feature that the tip shape of each convex portion is pointed according to the above-mentioned Spc (arithmetic mean curvature of protrusion vertexes) and Rsm (average length of curve elements) is emphasized, and the rough touch is improved. In addition, the matte effect can also be enhanced.

From the viewpoint of improving the matte effect and the rough touch, the Rz (maximum height) is preferably 8.50 $\mu$m or more, more preferably 9.00 $\mu$m or more, and still more preferably 9.50 $\mu$m or more, and the upper limit is preferably 26.00 $\mu$m or less, more preferably 24.00 $\mu$m or less, and still more preferably 22.00 $\mu$m or less. Note that when the Rz (maximum height) is measured herein, the cut-off value is 0.8 mm.

(Ra (arithmetic mean roughness))

In the present embodiment, the surface shape preferably has an Ra (arithmetic mean roughness), which is a parameter of the contour curve in the transverse direction as specified in JIS B0601:2013, of 1.00 $\mu$m or more and 5.50 $\mu$m or less.

The Ra (arithmetic mean roughness) is one of the parameters of the contour curve in the height direction, and is the average value of the height difference from the mean plane between the contour curves with a reference length. The smaller the value of Ra (arithmetic mean roughness), the smaller the height difference between convex portions in the surface shape, or concave portions formed accordingly, and the Ra is an indicator that indicates the trend in which the shape is smoother and more uniform. Thus, when the Ra (arithmetic mean roughness) is 1.00 $\mu$m or more and 5.50 $\mu$m or less for the surface shape that satisfies the above Spc (arithmetic mean curvature of protrusion vertexes) and Rsm (average length of curve elements), there exists a greater number of convex portions having a more uniform and gentler shape in the surface shape, which can suppress an outlandish tactile sensation, and, in particular, improves a rough touch. In addition, the matte effect can also be enhanced.

From the viewpoint of improving the matte effect and the rough touch, the Ra (arithmetic mean roughness) is preferably 5.25 $\mu$m or less, more preferably 5.00 $\mu$m or less, and still more preferably 4.50 $\mu$m or less, and the lower limit is preferably 1.00 $\mu$m or more, more preferably 1.50 $\mu$m or more, and still more preferably 1.75 $\mu$m or more. Note that when the Ra (arithmetic mean roughness) is measured herein, the cut-off value is 0.8 mm.

[About layer structure]

The matte article of the present embodiment is not limited in terms of a layer structure and any layer structure may be adopted, as long as the surface shape has the shape according to the above parameters.

The simplest layer structure that the matte article of the present embodiment has is a single layer structure as shown in Fig. 4. Examples of the article shown in Fig. 4 include: an article having the above surface shape on one side of a cured resin composition layer, preferably a cured layer made of a curable resin composition containing a curable resin such as an ionizing radiation curable resin as described later; or, an article structured by a single layer, such as an article in which a surface of a resin molding has been embossed or otherwise processed to form a surface shape.

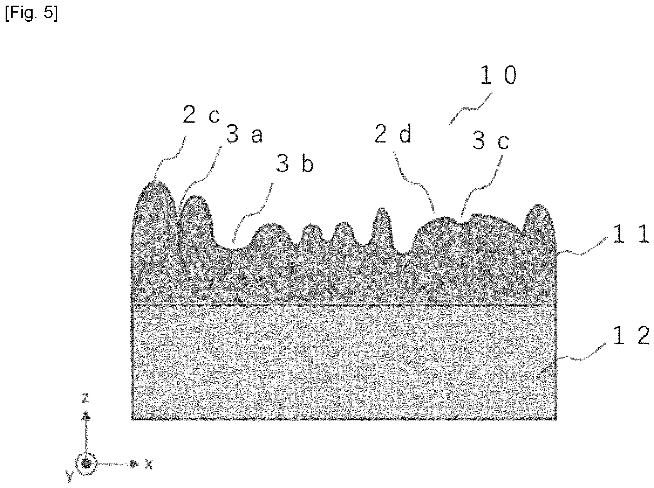

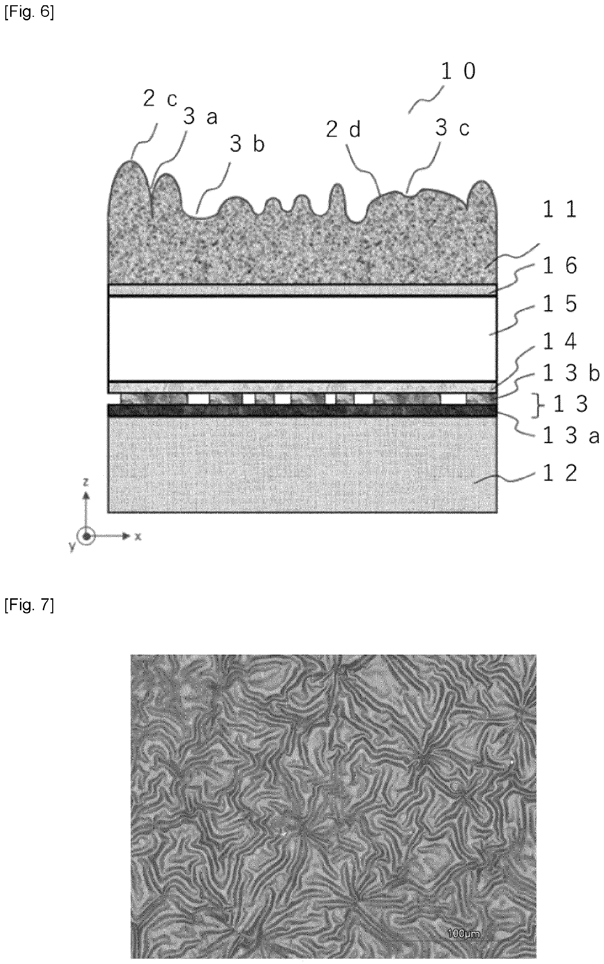

In addition, from the viewpoint of flexibly corresponding to various performance requirements such as the mechanical strength, suitability for post-processing, and design appearance of an article in accordance with various demands, and/or from the viewpoint of, for instance, suitability for manufacturing and suitability for handling, the examples also include an article composed of a laminate produced by laminating multiple layers as shown in Figs. 5 and 6, for example, a laminate having a base material and a cured product layer as a matte layer that has the above-described surface shape on at least a part thereof and is made of, for example, a cured resin composition.

The following describes each layer constituting a matte article of the present embodiment, starting with layers constituting a laminate having a base material and a cured product layer (a matte layer) having the above surface shape on at least a part thereof, which case is one of the preferred forms of an article including a laminate.

[Base material]

The base material for forming a matte article of the present embodiment has no particular restrictions on its form (or shape). It is possible to preferably adopt the base material from various kinds of shapes such as films, sheets, plates, polyhedrons, polygonal columns, cylinders, spheres, or rotary ellipsoids. Here, films, sheets, and plates are referred to as films, sheets, and plates in terms of their relative thinness. However, as used herein, there is no particular significance in making a strict distinction among these three. The differences among films, sheets and plates should not cause any differences in the interpretation of the right of the present disclosure. Therefore, as used herein, film(s), sheet(s), and plate(s) are sometimes collectively referred to as, for example, "sheet(s)" or "sheet-shaped".

When the matte article of the present embodiment is composed of a laminate, the shape of the base material is preferably a sheet. When the base material is in the form of a sheet, the suitability for manufacturing is improved. In addition, since the base material can be easily integrated with a resin molding by, for instance, adhesion, the suitability for post-processing is improved.

Examples of a material constituting the base material include, but are not limited to, a resin, a metal, a non-metallic inorganic material, a fibrous material, or a woody material. Each material may be selected, if appropriate, depending on its application. A single layer of base material made of these various materials or a combination of two or more layers of base material made of these various materials may be used. In the case of multiple layers, two or more different material layers may be stacked and integrated to complement the functions of the materials in each layer.

When a base material having multiple layers is adopted, the following forms are preferred, where each layer constituting the multi-layer is described as, for example, a layer made of material A and a layer made of material B, and a laminate consisting of these layers is denoted as "A/B":

(1) resin/woody material;
(2) resin/metal;
(3) resin/fibrous material;
(4) resin/non-metallic inorganic material;
(5) resin 1/resin 2 (e.g., the case of a multi-layer made of different resins such as "olefin resin/acrylic resin");
(6) metal/woody material;
(7) metal/non-metallic inorganic material;
(8) metal/fibrous material;
(9) metal 1/metal 2 (e.g., the case of a multi-layer made of different metals such as "copper/chrome"); or
(10) non-metallic inorganic material/fibrous material.

In addition, when the base material has multiple layers, the base material may further have, between each of the multiple layers, an adhesive layer, a bonding agent layer, or a primer layer (also called an anchor layer or an easy-to-adhere layer) as a layer to increase adhesion between adjacent layers.

Examples of the resin that can be used for a base material include each synthetic resin or natural resin. Examples of the synthetic resin include a thermoplastic resin or a curable resin. Preferred is a thermoplastic resin in consideration of the suitability for manufacturing, handling, and post-processing of a matte article.

Examples of the thermoplastic resin include: an olefin resin such as polyethylene, polypropylene, polymethylpentene, an ionomer, and each olefin-based thermoplastic elastomer; a vinyl chloride resin such as polyvinyl chloride, polyvinylidene chloride, and a polyvinyl chloride-vinyl acetate copolymer; a polyester resin such as polyethylene terephthalate, polybutylene terephthalate, polyethylene naphthalate, an ethylene glycol-terephthalic acid-isophthalic acid copolymer, and a polyester-based thermoplastic elastomer; an acrylic resin such as poly(methyl(meth)acrylate), poly(ethyl(meth)acrylate), poly(butyl(meth)acrylate), and a (methyl(meth)acrylate)-(butyl(meth)acrylate) copolymer; a polyamide resin represented by, for instance, nylon 6 or nylon 66; a cellulose resin such as cellulose triacetate, cellophane, and celluloid; a styrene resin such as polystyrene, an acrylonitrile-styrene copolymer, and an acrylonitrile-butadiene-styrene copolymer (ABS resin); or polyvinyl alcohol, an ethylene-vinyl acetate copolymer, an ethylene-vinyl alcohol copolymer, a polycarbonate resin, a polyarylate resin, or a polyimide resin.

Examples of the natural resin include natural rubber, pine resin, or amber.

In addition, preferable examples of the curable resin include a thermosetting resin or an ionizing radiation curable resin, which are exemplified as a material constituting a matte layer described below.

Preferable examples of the metal that can be used for the base material include: aluminum alloy such as aluminum or duralumin; iron alloy such as iron, carbon steel, or stainless steel; copper alloy such as copper or brass; gold, silver, chromium, nickel, cobalt, tin, or titanium. In addition, preferable examples of the base material made of metal include a base material, the surface of which is, for instance, plated using the above metal(s).

Preferable examples of the non-metallic inorganic material that can be used for the base material include: a non-ceramic ceramics-based material such as cement, ALC (lightweight foamed concrete), gypsum, calcium silicate, and wood chip cement; a ceramic ceramics-based material such as porcelain, earthenware, glass, and enamel; or a natural stone such as limestone (including marble), granite, and andesite.

Preferable examples of the fibrous material that can be used for the base material include: paper such as thin paper, kraft paper, fine paper, Japanese paper, titanium paper, linter paper, sulfate paper, paraffin paper, parchment paper, glassine paper, lining paper for wallpaper, board paper, and plasterboard base paper; or a woven or non-woven fabric made of fiber such as polyester resin fiber, acrylic resin fiber, protein or cellulose-based natural fiber such as silk, cotton, and hemp, glass fiber, and carbon fiber. In order to improve the interlaminar strength between the fibers of paper base material made of paper or between the paper based material and other base materials used in combination with the paper based material, and to prevent fluffing, each resin such as acrylic resin, styrene-butadiene rubber, melamine resin, and urethane resin may be added (i.e., the base material may be impregnated or filled with the resin(s) after or during the papermaking process) to these materials. Preferable examples of the resin-added paper include inter-paper reinforced paper or resin-impregnated paper.

When the base material is a fibrous material such as paper, the base material may be impregnated with a liquid resin composition for forming a matte layer in application of the liquid composition, to cause the influence of a fibrous uneven shape of a base material surface to appear on a matte layer surface, thereby allowing no desired values of Spc and Rsm to be obtained. In this case, it is preferable to form a resin layer for prevention of impregnation on a surface of the base material of a fibrous material, onto which a matte layer is to be formed, by a known method, for example, application. Examples of a resin for forming such a resin layer for prevention of impregnation can include a two-component curable urethane resin.

Preferable examples of the laminate produced by laminating a layer made of fibrous material and a layer made of resin include wallpaper base paper produced by laminating a resin-made layer such as a vinyl chloride resin layer, an olefin resin layer, and an acrylic resin layer on a surface of wallpaper lining paper, which is widely used in the building materials field.

Preferable examples of a woody material that can be used for the base material include veneer, plywood, laminated wood, particle board, or medium density fiberboard (MDF) made of each wood such ad cedar, cypress, pine, zelkova, oak, walnut, rowan, teak, and rubber wood.

It is possible to use, as the base material, a base material made of the above material(s) without limitation, and the base material may be selected, if appropriate, according to, for instance, the desired properties. From the viewpoints of improving the matte effect and the rough touch, the base material is preferably made of a resin or made of a fibrous material, and among the resins, an olefin resin, vinyl chloride resin, polyester resin, or acrylic resin is preferable, and an olefin resin, polyvinyl chloride resin, or polyester resin is more preferable, polyethylene or polypropylene is preferable as the olefin resin, and polyvinyl chloride is preferable as the polyvinyl chloride resin. The polyester resin is preferably polyethylene terephthalate. Among fibrous materials, paper is preferred. By using a base material made of these materials, it is particularly easy to obtain the above surface shape and to improve the rough touch.

The shape and dimensions of the base material including a single layer or laminate are not particularly limited and may be selected, if appropriate, in consideration of the application, desired performance, suitability for post-processing, and others.

When a film, sheet, or plate shape is adopted, the thickness is a typical dimension in the design of a matte article. Such a thickness is not particularly limited, and may be selected from the range of preferably from 10 $\mu$m to 10 cm in consideration of, for instance, suitability for manufacturing, handling, or post-processing, mechanical strength, and cost performance. When a film or sheet shape is adopted, the range may be selected preferably from 20 $\mu$m to 300 $\mu$m, and when a plate shape is adopted, the range may be selected preferably from 1 mm to 2 cm.

From the viewpoint of improving adhesion between the base material and another layer such as a matte layer described below, and adhesion between the base material and an adherend such as a resin molding on which the matte article is stacked, at least one side of the base material can be subjected to surface treatment to improve adhesion, such as physical surface treatment such as an oxidation process and a roughening process, as well as chemical surface treatment.

Examples of the oxidizing process include corona discharge treatment, chromium oxidation treatment, flame treatment, hot air treatment, or ozone-UV treatment. Examples of the roughening process include sandblasting or solvent treatment. These surface treatments may each be selected, if appropriate, depending on the type of base material. Corona discharge treatment process is preferred from the viewpoints of, for instance, the effect of surface treatment in improving adhesion and workability.

The base material may be colored or not colored (may be transparent), and if colored, there are no restrictions on the mode of coloring; it may be transparently colored or opaquely colored (concealed coloring), which may be optionally selected.

If the base material is colored, examples of the coloring agent include an inorganic pigment such as a white pigment such as titanium white, iron black, yellow lead, titanium yellow, red oxide, cadmium red, ultramarine blue, and cobalt blue; an organic pigment or dye such as quinacridone red, isoindolinone yellow, phthalocyanine blue, a nickel-azo complex, an azomethine azo-based black pigment, and a perylene-based black pigment; a metal pigment made of aluminum, brass, or other scale-like foil fragments; or a pearl gloss pigment made of titanium dioxide-coated mica, basic lead carbonate, or other scale-like foil fragments. For example, when the surface hue of an adherend such as a resin molding on which a matte article is stacked is uneven, an inorganic pigment such as a white pigment may be used to conceal the surface hue and to improve the stability of the color tone of a decorative layer provided as desired.

In the case of coloring a resin-made base material, any of the following methods can be adopted, including addition of a coloring agent to the resin (kneading, mixing) or formation by coating film application using a coating agent containing a resin and a coloring agent. In the case of coloring a base material made of fibrous material such as paper, woven and non-woven fabric, any of blending with pulp or fiber material or coating film formation may be used, or these processes may be used in combination.

In the case of coloring a base material made of woody material, any of dyeing using a dye or coating film formation may be used, or these processes may be used in combination. In the case of coloring a metal-made base material, an electrolytic coloring process in which a positive electrode oxidation process is used to form a metal oxide film on a surface or other process may be used in addition to coating film formation. In the case of coloring a base material made of non-metallic inorganic material, any of coating film formation or addition into a base material may be used, or these processes may be used in combination.

The base material may be optionally blended with an additive. In the case of a resin as a main component, examples of the additive include an inorganic material such as calcium carbonate and clay, a flame retardant such as magnesium hydroxide, an antioxidant, a lubricant, a foaming agent, an antioxidant, a UV absorber, or a light stabilizer. The amount of additive blended is not particularly limited as long as the amount does not interfere with, for instance, surface properties and processing properties, and can be set, if appropriate, according to the required properties and others.

From the viewpoint of improving the weather resistance of a matte article of the present embodiment, it is preferable to use a weathering agent such as a UV absorber and a light stabilizer among the above additives.

Examples of the UV absorber or light stabilizer include those that can be included in a matte layer described below.

These weathering agents such as a UV absorber and a light stabilizer and/or other various additives may be used singly or a plurality of the kinds may be used in combination.

In this embodiment, the above base materials may be used singly or in combination. Multiple paper base materials may be combined. Also, a paper base material and fiber base material, a paper base material and resin base material, a fiber base material and resin base material, or a paper base material and fiber base material and resin base material may be combined. Here, the resin base material may be structured using a single layer of the above resin base material or multiple layers of the same or different types of resin.

The thickness of the base material is described as above. When the base material is the above resin film or sheet, the thickness is preferably 20 $\mu$m or larger, and the upper limit is preferably 300 $\mu$m or less. In consideration of, for instance, suitability for manufacturing, handling, or post-processing, mechanical strength, and cost performance, the thickness is more preferably 40 $\mu$m or larger, and the upper limit is more preferably 200 $\mu$m or less and still more preferably 100 $\mu$m or less.

From the same viewpoint, when the base material is paper, the typical basis weight is preferably from 20 to 150 g/m$^2$ and more preferably from 30 to 100 g/m$^2$.

[Matte layer]

A matte layer in a matte article of the present embodiment is structured as a single layer or stacked and provided on at least a part of the base material and is a layer having the above surface shape, i.e., a surface shape with an Spc (arithmetic mean curvature of protrusion vertexes) of more than 4000 mm$^{-1}$ and an Rsm (average length of curve elements) of 30 $\mu$m or more, and the matte layer is preferably provided over the entire surface of one side of the base material. When the matte article has the base material, the matte layer is a layer provided as shown in Fig. 5 so that the surface that has the surface shape is the opposite side of the above base material side. Thus, the matte article of the present embodiment is preferably provided with a matte layer and has a structure in which the above surface shape is formed by the surface of the matte layer. It is preferable from the viewpoint of, for instance, mechanical strength and suitability for manufacturing that the matte layer is made of a cured resin composition, preferably a cured curable resin composition containing a cured resin.

The above resin composition for forming a matte layer is preferably a resin composition containing a resin and a wrinkle formation stabilizer (hereinafter, sometimes referred to as a "resin composition for forming a matte layer") from

EP 4 316 819 A1

the viewpoint of obtaining a matte article with an excellent matte effect and a rough touch. That is, the matte layer in the present embodiment is preferably a layer containing a resin and a wrinkle formation stabilizer.

(Wrinkle formation stabilizer)

The wrinkle formation stabilizer has the function of stabilizing the formation of wrinkles on at least one surface of the matting layer, thereby providing stable matting effect visibility (hereinafter, sometimes referred to as "stable matte effect visibility" or other expressions equivalent thereto), wherein the visibility of the matting effect is uniformly expressed over the entire surface of the matting layer having said surface shape, formed at least partially on the surface of the matted article, thereby reducing uneven partial gloss, as well as surface condition uniformity (also referred to as "texture") due to stable wrinkle formation over the entire surface of the matting layer. The wrinkles formed in the matte layer also contribute significantly to the development of a rough touch.

The "stable wrinkle formation" herein means that each in-plane distribution (dispersion $\sigma$) with respect to a wrinkle shape and geometric characteristic values thereof (length and width of each protrusion, and ratio between protrusions), and their statistic indicators (Spc, Rsm, Rz and Ra in the present disclosure, and furthermore, if necessary, Sm, Ssk, Sku, and the like) is converged by addition of the wrinkle formation stabilizer, as compared with the case of no addition thereof. Thus, the in-plane distribution (dispersion $\sigma$) of the 60° gloss value of the surface shape described below is also converged.

Therefore, even if the so-called "matting agents" in the conventional art and the "wrinkle formation stabilizers" in the present embodiment have the same constituent substances and average particle size, they are different in terms of their matting mechanism (effect), structure for expressing matting, and relationship between the amount used and the degree of gloss (gloss value) on the surface. The wrinkle formation stabilizer also differs from the "matting agent" in development of a rough touch by forming wrinkles.

In conventional art such as the above-mentioned PTL1, the matting agents used for matte effect expression can elicit their own matte effect visibility due to the light diffusion effect caused by their physical shape. Specifically, what is generally called a matting agent usually has a refractive index difference between the matting agent particles and the surrounding resin and air, and develop the matte effect by the light diffusion effect caused by the light reflection corresponding to the contour shape of the particles and the refractive interface. In contrast, in a matte article of the present embodiment, the wrinkle formation stabilizer does not elicit the matte effect visibility by light diffusion through the light reflection and refraction caused by the particles themselves, but stabilizes the formation of wrinkles on the surface of the matte layer due to the wrinkle formation stabilizer, thereby imparting texture as well as the matte effect visibility to the matte article in a stable manner by the light diffusion effect at a refractive index difference interface between such a surface and air. Therefore, the wrinkle formation stabilizer used in the present embodiment is different from the matting agent that itself expresses matte effect visibility in terms of mechanism (effect) of matting, and structure to express matting (even if the constituent substances and average particle size of two are the same).

Further, the "wrinkle formation stabilizer" and the "matting agent" are different in terms of the relationship between the content and the surface gloss (gloss value). The surface 60° gloss value $G_{60°}^{AW}(C)$ of the case where the same substance A is used as a wrinkle formation initiator AW (W: wrinkle) and a specific amount C is included to form wrinkles on a surface is clearly lower than the surface 60° gloss value $G_{60°}^{AM}(C)$ of the case where the same substance A is used as a mere matting agent AM and inclusion of the substance at the specific amount C does not cause wrinkle formation on the surface. That is, the following relationship is established:

$$G_{60°}^{AW}(C) < G_{60°}^{AM}(C).$$

The matte layer in the matte article of the present embodiment may contain an agent conventionally used as a matting agent. Considering the characteristics of the effect of the present invention, which is to stably obtain extremely excellent matte effect to a degree that cannot be obtained by using a matting agent, and to obtain a rough touch, the matte layer is preferably free of a matting agent. Thus, it can be said that the matte article of the present embodiment provide extremely excellent matte effect visibility and texture, even though the article is substantially free of a matting agent conventionally used to obtain matte effect visibility. Here, the wording "free of a matting agent" means that, in addition to not containing any matting agent at all, even if it is contained, no matte effect visibility based on their own matting agent effect is elicited. Specifically, the content of matting agent is less than 15.0 parts by mass, preferably 10.0 parts by mass or less, and more preferably 3.0 parts by mass or less based on 100 parts by mass of resin.

Note that as used herein, from the viewpoint of forming convex portions by the protrusion effect as already described, specifically, the term "matting agent" means particles with an average particle size, the lower limit of which is more than 100% of the thickness of a layer that can contain the matting agent, namely, the matte layer, or more than 30 $\mu$m, whichever is smaller.

In the present embodiment, any of wrinkle formation stabilizer may be used without particular limitation if the stabilizer is not a matting agent and the upper limit of the average particle size is 100% or less of the thickness of the matte layer or 30 $\mu$m or less, whichever is smaller.

From the viewpoint of the improvement of the matte effect and the rough touch, it is preferable to use at least one of two types of wrinkle formation stabilizers distinguished by their average particle size for the wrinkle formation stabilizer should have an average particle size, the upper limit of which is 100% or less of the thickness of the matte layer or 30 $\mu$m or less, whichever is smaller. The two types of wrinkle formation stabilizers specifically include: a wrinkle formation stabilizer 1 having an average particle size of 1 $\mu$m or larger and, as the upper limit, 100% or less of the thickness of the matte layer or 30 $\mu$m or less, whichever is smaller; and a wrinkle formation stabilizer 2 having an average particle size of less than 1 $\mu$m. In the present embodiment, the use of at least one of the two types of wrinkle formation stabilizers stabilizes wrinkle formation and provides a stable and excellent matte effect, as well as a rough touch.

In the present embodiment, the wrinkle formation stabilizer 1 or the wrinkle formation stabilizer 2 may be used singly, or the wrinkle formation stabilizer 1 and the wrinkle formation stabilizer 2 may be used in combination, and it is more preferable to use the wrinkle formation stabilizer 1 and the wrinkle formation stabilizer 2 in combination from the viewpoint of improving the matte effect and the rough touch.

The wrinkle formation stabilizer used may be, for instance, organic and/or inorganic particles.

Examples of an organic material constituting the organic particles include polymethyl methacrylate, an acrylic-styrene copolymer resin, a melamine resin, polycarbonate, polystyrene, a polyvinyl chloride resin, a benzoguanamine-melamine-formaldehyde condensate, silicone, a fluorine-based resin, or a polyester-based resin.

Examples of an inorganic material constituting the inorganic particles include silica, alumina, calcium carbonate, aluminosilicate, or barium sulfate. Among these, silica is preferred because of its excellent transparency.

Examples of the shape of wrinkle formation stabilizer include, but are not particularly limited to, a spherical, polyhedral, scaly, or irregular shape.

The wrinkle formation stabilizer 1 has an average particle size of 1 $\mu$m or larger and, as the upper limit, 100% or less of the thickness of the matte layer or 30 $\mu$m or less, whichever is smaller. From the viewpoint of stable enhancement of the matte effect and improvement of the rough touch, the average particle size of wrinkle formation stabilizer 1 is preferably 1.3 $\mu$m or larger, more preferably 1.5 $\mu$m or larger, and still more preferably 1.8 $\mu$m or larger. The upper limit based on the thickness of the matte layer is preferably 90% or less of the thickness of the matte layer, more preferably 80% or less of the thickness of the matte layer, and still more preferably 70% or less of the thickness of the matte layer. The absolute value is preferably 20 $\mu$m or less, more preferably 10 $\mu$m or less, still more preferably 8 $\mu$m or less, and still more preferably 7 $\mu$m or less. In the case of any combination of the upper limit based on the thickness of the matte layer or the upper limit based on the absolute value, whichever is smaller should be used. For example, either 90% or less of the thickness of the matte layer or 20 $\mu$m or less, whichever is smaller, may be used as the upper limit, or either 90% or less of the thickness of the matte layer or 10 $\mu$m or less, whichever is smaller, may be used as the upper limit. Note that the thickness of the matte layer is described later.

The average particle size of wrinkle formation stabilizer 2 is less than 1 $\mu$m. From the viewpoint of stable enhancement of the matte effect by the stable wrinkle formation and improvement of the rough touch, the average particle size of wrinkle formation stabilizer 2 is preferably 1 nm or larger, more preferably 3 nm or larger, and still more preferably 5 nm or larger, and the upper limit is preferably 900 nm or less, more preferably 700 nm or less, and still more preferably 500 nm or less.

As used herein, the average particle size of wrinkle formation stabilizer is measured as the mass-averaged d50 in particle size distribution measurements by laser light diffractometry.

From the viewpoint of stable enhancement of the matte effect by the stable wrinkle formation and improvement of the rough touch, the content of wrinkle formation stabilizer (the total content when wrinkle formation stabilizers 1 and 2 are used in combination) is preferably 0.5 parts by mass or more, more preferably 0.75 parts by mass or more, still more preferably 1.0 parts by mass or more, and still more preferably 1.2 parts by mass or more based on 100 parts by mass of the resin used to form the matte layer, and the upper limit is not particularly limited from the viewpoint of improving the stable matte effect and the rough touch, and is preferably 25.0 parts by mass or less, more preferably 15.0 parts by mass or less, still more preferably 10.0 parts by mass or less, still more preferably 7.5 parts by mass or less, especially 6.0 parts by mass or less from the viewpoint of efficiently improving the productivity of decorative material and the matte effect visibility and texture due to, for instance, coating performance of a resin composition for forming a matte layer.

In the case where the wrinkle formation stabilizers 1 and 2 are used in combination, the content of each wrinkle formation stabilizer 1 or 2 is not particularly limited as long as the total content is within the above-mentioned range. However, the content of wrinkle formation stabilizer 2 based on 100 parts by mass of resin is preferably 0.1 parts by mass or larger, more preferably 0.5 parts by mass or larger, still more preferably 1.0 parts by mass or larger, and the upper limit is preferably 10.0 parts by mass or less, more preferably 7.5 parts by mass or less, still more preferably 5.0 parts by mass or less, and still more preferably 3.5 parts by mass or less. In addition, the blending ratio between the wrinkle formation stabilizers 1 and 2 is set such that the amount of wrinkle formation stabilizer 1 blended when the total content is set to 100 parts by mass is preferably 0.05 parts by mass or more and 0.95 parts by mass or less, more preferably 0.10 parts by mass or more and 0.90 parts by mass or less, still more preferably 0.20 parts by mass or more and 0.80 parts by mass or less, still more preferably 0.30 parts by mass or more and 0.70 parts by mass or less.

The wrinkle formation stabilizer used may be, for instance, organic and/or inorganic particles as described above. These particle types themselves may include those conventionally used as matting agents. For example, matting agents such as spherical alumina and calcium carbonate is used in the matte layer of the decorative sheet described in PTL1 above. In order that the matting agents, such as spherical alumina and calcium carbonate, develop their own matte effect visibility by the light diffusion effect caused by their physical shape, it is necessary to use the total content of about 50 parts by weight, i.e., 10 parts by weight of spherical alumina and 40 parts by weight of calcium carbonate, per 100 parts by weight of resin as described in PTL1. However, in the present embodiment, even if the content is small as already mentioned, that is, even if the content is smaller than the content required to develop their own matte effect visibility by the light diffusion effect caused by their physical shape, an extremely excellent matte effect is obtained, and a rough touch is also obtained. Therefore, it can be said that, in the matte article of the present embodiment, wrinkles are stably formed on the surface even though the article contains substantially no matting agents, thereby stably obtaining more excellent matte effect visibility than when a matting agent is used, as well as providing texture, and in addition a rough touch can be obtained.

(Surface shape of matte layer)

The matte layer in the matte article of the present embodiment is a layer having the above surface shape. This layer is preferably made of a cured resin composition for forming a matte layer, which composition contains a certain content of specific wrinkle formation stabilizer described above. As mentioned above, wrinkles are stably formed on a surface of the matte layer, thereby the matte layer develops stably matte effect by the light diffusion effect caused by the shape of the wrinkles, and also develops a rough touch. Fig. 3 is a schematic plan view of a matte article according to an embodiment of the present disclosure, and a surface of the matte article obtained in Examples is schematically imaged. Fig. 3 shows that the matte article of the present embodiment has wrinkles formed on its surface, i.e., on a surface of the matte layer. Here, the "plan view" means looking at a surface of the matte article from the Z-axis positive direction in the XYZ coordinate system shown in Figs. 4 to 6.

The wrinkles formed on at least one surface of the matte layer are not particularly limited, as long as the wrinkles have the above surface shape, i.e., a surface shape having Spc and Rsm within the above specific numerical range, and preferably, in addition, preferably Rz and Ra within the above specific numerical range. The wrinkles are formed to give the above surface shape, and therefore the wrinkle formation stabilizer stabilizes the formation and causes a stable matte effect and a rough touch.

With regard to the wrinkles, from the viewpoint of developing the above surface shape, enhancing the matte effect, and improving the rough touch, at least one surface of the matte layer preferably have an uneven shape composed of irregular wrinkles. The irregular wrinkles are preferably composed of a plurality of convex portions formed by a plurality of protrusions and a plurality of concave portions formed by being surrounded by the plurality of protrusion portions, and the protrusion portions preferably have streak-shaped protrusions. As used herein, the wording "streak-shaped protrusions" (hereinafter also referred to as "streak-shaped protrusions") means that the ratio (length/width) between the length and the width of each protrusion is 3 or higher, preferably 5 or higher, and more preferably 10 or higher. The method for determining the length and width is described below.

The more preferable irregular wrinkles in the present embodiment are composed of a plurality of convex portions formed by a plurality of streak-shaped protrusions and a plurality of concave portions formed by being surrounded by the plurality of the streak-shaped protrusions.

Examples of these wrinkle-related forms include those shown in Fig. 3. Fig. 3 illustrates that the surface of the matte article, i.e. the surface of the matte layer, has irregular wrinkles in a plan view; the irregular wrinkles are composed of a plurality of convex portions 2 formed by a plurality of curved streak-shaped protrusions and a plurality of concave portions 3 formed by being surrounded by the plurality of protrusions (the plurality of convex portions 2); and at least a part of the plurality of curved convex portions 2 are formed by respective meandering streak-shaped protrusions and the meandering concave portions 3 are formed by being surrounded by the meandering streak-shaped protrusions. In the matte article of the present embodiment, the wrinkles are stably formed as shown in Fig. 3 to develop stable matte effect and a rough touch.

As used herein, the term "curved" means having one or more sections where the direction of extension of each continuous streak-shaped convex portion 2 is inverted from one side to the other side in a plan view. Examples of the section where the direction of extension is inverted from one side to the other side include a form with an inflection point when the width of the shape of each streak-shaped convex portion 2 in a plan view is ignored (when the width is considered to be 0) and the convex portion is approximated by a continuous curve. Other Examples include a form with a section approximated by a V-shaped fold line or two sides flanking one vertex of a triangle when the width of the shape of each streak-shaped convex portion 2 in a plan view is ignored and the convex portion 2 is approximated as a straight line.

The term "meandering" means having at least two sections (hereinafter, also referred to as "inverted sections") where the extending direction of continuous streak-shaped convex portion 2 is inverted from one side to the other side in a plan view, and having a section where, as the streak-shaped convex portion 2 extends in the extension direction, the extending direction of the streak-shaped convex portion 2 is alternately inverted in the opposite direction at the two sites adjacent to each other. Examples include a form with a section approximated by the Roman letter "S" when the streak-shaped convex portion 2 is approximated by a continuous curve when the width of the shape is ignored in a plan view. Other examples include a form with a section approximated by the Roman letter "W" when the streak-shaped convex portion 2 is approximated by a straight line when the width of the shape is ignored in a plan view.

As used herein, the term "irregular" means that a shape is not formed by a certain rule or a shape is not arranged by a certain rule, i.e., is not patterned. Typical examples of a non-irregular shape (a regular shape) include a shape periodicity arranged in a certain direction, like a so-called lenticular lens where a plurality of cylindrical unit lenses is arranged adjacent to each other in a direction perpendicular to the longitudinal direction. Thus, irregular wrinkles in the present embodiment encompass embodiments wherein the shape of one protrusion portion itself is not a shape formed according to a certain rule such as periodicity but is irregular; the shape of the plurality of convex portions formed by the plurality of protrusions is not formed and arranged according to a certain rule, and is irregular; or the shape of concave portion surrounded by such a plurality of protrusions is also irregular.

In the matte article of the present embodiment, when any of the shape of one protrusion portion (one convex portion) itself, the shape and arrangement of each of a plurality of protrusion portions (plurality of convex portions), or the shape of concave portion surrounded by a plurality of protrusions is irregular, a matte effect caused by the irregular wrinkles and a rough touch. Each of the above is preferably irregular. The irregular wrinkles in the matte article of the present embodiment can improve the matt effect visibility and texture, and stably develop an extremely excellent matte effect as well as a rough touch.

As already mentioned, the matte layer has wrinkles, i.e., an uneven shape, on at least one of its surfaces. The convex and concave portions in the uneven shape are, for example, binarized and distinguished using the difference in brightness of a surface image of a decorative material in the present embodiment such that the darkest part of the density distribution image is set to level 255, the lightest part of the density distribution image is set to level 0, and for levels 0 to 255, levels 0 to 127 should be assigned as a concave portion and levels 128 to 255 should be assigned as a convex portion.

It is preferable that at least a part of the surface of a matte article of the present embodiment has irregular wrinkles, and it is more preferable that irregular wrinkles are formed over the entire surface. There are no restrictions on an area where the wrinkles are formed on a surface of the matte article. For example, if wrinkles are formed not only on the areas corresponding to a pattern described below (on the pattern), but also on at least a part of the surface, the matte effect by formation of the wrinkles and a rough touch can be developed. For example, in the case where the below-described decorative layer is provided and part thereof have irregular wrinkles, the wrinkles are formed at an area corresponding to a pattern of the decorative layer (e.g., on a pattern) thereby the design can be improved because the pattern is seen as a more matted area than the surrounding area.

As also shown in Fig. 3, it is preferable to have a plurality of convex portions formed by a plurality of irregular but somewhat homogeneous protrusions, and concave portions surrounded by the convex portions. Thus, shape in which the width of the convex portion (protrusion portion) 1 varies markedly is unlikely to result in the above surface shape, and therefore it is not preferred aspect either for obtaining matte effect visibility and texture, or for obtaining a rough touch. The following describes specific aspects of the shapes of the convex portions (protrusion portions) where irregular wrinkles are formed and concave portions, which can be superior in order to stably enhance a matte effect and improve a rough touch. When the wrinkles have the following shapes, the above surface shape is likely to be provided, thereby improving a matte effect and a rough touch.

With regard to the shape of the wrinkles formed on at least one surface of the matte layer, the height of the convex portion (the height of the protrusion portion) is preferably 0.5 $\mu$m or greater, more preferably 1 $\mu$m or greater, and still more preferably 2 $\mu$m or greater, and the upper limit is about 10 $\mu$m or less. The width of the convex portion is preferably 0.1 $\mu$m or larger, more preferably 0.3 $\mu$m or larger, and still more preferably 0.5 $\mu$m or larger, and the upper limit is preferably 10 $\mu$m or less, more preferably 4 $\mu$m or less, and still more preferably 3 $\mu$m or less. When the height and width of the convex portion are within the above ranges, the above surface shape is more likely to appear, and thereby a matte effect can be stably enhanced due to the interaction with the concave portions, and a rough touch is improved.

Here, the above dimensions of the convex portion are obtained by averaging randomly selected 10 convex portions (protrusion portions) in optionally selected 10 areas (10 areas of 100 $\mu$m square regions), i.e., 100 convex portions in total, on a matte product of the present embodiment. As shown in Fig. 3, the width of each convex portion (protrusion portion) 1 varies and may be wide or narrow, and therefore, the width of one convex portion (protrusion portion) 1 is obtained by averaging the widths of any five points on the convex portion (protrusion portion) 1. The same applies to the height of the convex portion (protrusion portion).

The depth of the concave portion is preferably 0.5 μm or deeper, more preferably 1 μm or deeper, and still more preferably 2 μm or deeper, and the upper limit is about 10 μm or less. The width of the concave portion is preferably 0.1 μm or larger, more preferably 0.2 μm or larger, and still more preferably 0.3 μm or larger, and the upper limit is preferably 10 μm or less, more preferably 3 μm or less, and still more preferably 2 μm or less. When the depth and width of concave portion are within the above ranges, the above surface shape is more likely to appear, and thereby a matte effect can be stably enhanced due to the interaction with the convex portions, and a rough touch is improved.

Here, the dimensions of the concave portion are determined in substantially the same way as for the dimensions of the convex portion described above.

The distance from the top of the convex portion to the bottom of the concave portion (the height difference between the convex and concave portions) is preferably 1 μm or larger, more preferably 2 μm or larger, and still more preferably 4 μm or larger, and the upper limit is preferably 20 μm or less, more preferably 8 μm or less, and still more preferably 7 μm or less. When the distance is within the above range, the above surface shape is more likely to appear, and thereby a matte effect can be stably enhanced and a rough touch can be improved.

Here, the dimensions of the concave portion are determined in substantially the same way as for the dimensions of the convex portion described above.

The percentage of the convex portion occupied is preferably 15% or larger, more preferably 20% or larger, and still more preferably 30% or larger, and the upper limit is preferably 80% or less, more preferably 70% or less, and still more preferably 60% or less. When the percentage of the convex portion occupied is within the above range, the above surface shape is more likely to appear, and thereby a matte effect can be stably enhanced due to the interaction with the percentage of concave portion occupied by being surrounded by the convex portions and a rough touch can be improved.

Here, the percentage of the convex portion occupied is obtained by averaging the percentages of the convex portions in randomly selected 10 areas (10 areas of 100 μm square regions) on a matte article of the present embodiment.

The convex and concave portions may have a section extending in substantially the same direction and having substantially the same width. From the viewpoint of the enhancement of the matte effect and improvement of the rough touch, their lengths are preferably short. Specifically, the length of each of the continuous convex and concave portions extending in substantially the same direction and having substantially the same width is preferably 95 μm or less, more preferably 80 μm or less, and still more preferably 70 μm or less, and the lower limit is preferably 5 μm or larger, more preferably 10 μm or larger, and still more preferably 15 μm or larger. When the length is within the above range, the wrinkles are more irregular, and thereby a matte effect can be stably enhanced and a rough touch can be improved.

Here, with regard to any 10 convex and concave portions (i.e., 100 convex and concave portions in total) in any 10 areas (10 areas of 100 μm square regions) on a matte product of the present embodiment, it is preferable that 80% or more of them satisfy the above conditions, it is more preferable that 85% or more of them satisfy the above conditions, it is still more preferable that 90% or more of them satisfy the above conditions, and it is still more preferable that 95% or more of them satisfy the above conditions. As used herein, the term "substantially" of "substantially the same" means that they are generally the same, and means that they are not branched or means a difference within ±3 degrees in terms of direction or a difference within ±5% in terms of width.

The number of the convex portions (the protrusion portions) in a 100 μm square area is preferably 10 or larger, more preferably 20 or larger, and still more preferably 30 or larger, and the upper limit is preferably 200 or less, more preferably 100 or less, and still more preferably 70 or less. When the number of convex portions is within the above range, the matte effect is stably enhanced, and the rough touch is improved.

The number of the convex portions is obtained by averaging the numbers of the convex portions in 10 areas (10 areas of 100 μm square regions) on a matte article of the present embodiment.

Fig. 4 is a cross-sectional view of a matte article according to an embodiment of the present embodiment, and is a cross-sectional view of the matte article 10 cut in a plane parallel to the thickness direction (the Z direction in the drawing).

The shape of the concave portion may be, for example, pointed as illustrated in 3a of Fig. 4, or a semi-circle or semi-ellipse or a combination thereof as illustrated in 3b. In addition, as illustrated in 3c of Fig. 4, a part of one convex portion may have a concave portion.

On the other hand, the convex portion may be displayed like a semi-circular or semi-elliptical shape, although its width may be narrower or wider, as shown in 2c and 2d of Fig. 4.

The thickness of the matte layer is not particularly limited as long as the thickness can cause a stable matte effect and allows for the formation of wrinkles so as to be able to elicit a rough touch. In view of ease of manufacturing and other factors, the thickness is usually 1 μm or larger, preferably 2 μm or larger, more preferably 3 μm or larger, still more preferably 4 μm or larger, and still more preferably 5 μm or larger, and the upper limit is preferably 300 μm or less, more preferably 200 μm or less, still more preferably 150 μm or less, and still more preferably 100 μm or less.

As used herein, the thickness of the matte layer is determined by measuring the thicknesses at 20 points on a cross section of a matte article from an image taken using a scanning electron microscope (SEM), and averaging the values at the 20 points. Note that the acceleration voltage of the SEM is set to be 3 kV, and the magnification is set according to the thickness. In addition, the same applies to the thicknesses of another layer.

The matte layer is a layer having the above surface shape on its entire surface. Since the matte article of the present embodiment has the above surface shape on at least a part of the surface, the surface shape is only required to be provided on at least a part of the surface of the matte article, or may be provided over the entire surface of the matte article. When the matte article of the present embodiment has the above base material and the matte layer, the surface shape may be provided on at least a part of the surface of the base material, or it may be provided over the entire surface of the base material.

When the matte layer is provided on a section of the matte article that a user can see and touch, that is, when the above surface shape is provided on a section of the matte article that an user can see and touch, the effects of the present invention, namely a matte effect and a rough touch, can be achieved.

When the base material is in the form of a film, sheet, or plate, the matte layer may be provided on a section of the matte article that an user can see and touch, and the matte layer may be provided on at least a part of the surface or may be provided over its entire surface. From the viewpoint of improving the matting effect and the rough touch, it is preferable that the matte layer is provided over the entire surface of one of the surfaces, as shown in Figs. 4 to 6.

(Resin)

As the resin for forming the matte layer, any resin may be used in which a resin composition for forming the matte layer that contains a given amount of the above wrinkle formation stabilizer to constitute a matte layer by producing a cured product though curing. Examples of such a resin include an ionizing radiation curable resin. The matte layer is a layer that can be provided on the top surface of the matte article of the present embodiment, as also shown in Figs. 4 to 6. Therefore, in addition to being a resin that easily forms wrinkles by using a wrinkle formation stabilizer, it is preferable for the resin to easily develop surface properties such as processing properties, stain resistance, scratch resistance, and weather resistance, from the viewpoint of improving usability as a matte article. Ionizing radiation curable resins are preferred from these perspectives. The matte article of the present embodiment contains a very low amount of the wrinkle formation stabilizer contained in the matte layer, and therefore the performance of the resin for forming the matte layer is more directly demonstrated as its surface properties.

Ionizing radiation curable resins are resins with an ionizing radiation curable functional group. The ionizing radiation curable functional group is a group crosslinked and cured by ionizing radiation irradiation. Preferable examples include an ethylenic double bond-containing functional group such as a (meth)acryloyl group, a vinyl group, and an allyl group. Note that as used herein, the (meth)acryloyl group refers to an acryloyl or methacryloyl group. Note that as used herein, the (meth)acrylate refers to acrylate or methacrylate.

The ionizing radiation means electromagnetic waves or charged particle rays with energy quanta allowing for polymerization and/or cross-linking of molecules. Usually, ultraviolet (UV) light or electron beams (EB) are used. Other examples include electromagnetic waves such as X-rays, and $\gamma$-rays and charged particle rays such as $\alpha$-rays and ion beams.

Examples of the ionizing radiation curable resin include an electron beam curable resin or a UV curable resin. A UV-curable resin is preferred from the viewpoint of stabilizing wrinkle formation by the wrinkle formation stabilizer to enhance the matte effect and to improve the rough touch.

The ionizing radiation curable resin can be selected for use, if appropriate, from the group consisting of polymerizable monomers and polymerizable oligomers conventionally used as ionizing radiation curable resins.

As each polymerizable monomer, preferred is a (meth)acrylate-based monomer having a radical polymerizable unsaturated group in the molecule. Particularly preferred is a polyfunctional (meth)acrylate monomer. As used herein, the term "(meth)acrylate" means "acrylate or methacrylate".

Examples of the polyfunctional (meth)acrylate monomer include a (meth)acrylate monomer having two or more ionizing radiation-curable functional groups in the molecule and at least a (meth)acryloyl group as the functional group.

From the viewpoint of stabilizing wrinkle formation to enhance stable matte effect, from the viewpoint of improving the rough touch, and in addition from the viewpoint of improving the surface properties such as post-processing properties, scratch resistance, and weather resistance, the number of functional groups in the polyfunctional (meth)acrylate monomer is preferably 2 or more and 8 or less, more preferably 2 or more and 6 or less, still more preferably 2 or more and 4 or less, and still more preferably 2 or more and 3 or less. The above number of functional groups makes it particularly easier to obtain the above surface shape and to improve the rough touch.

These polyfunctional (meth)acrylates may be used singly or the multiple kinds thereof may be used in combination.

Examples of the polymerizable oligomer include a (meth)acrylate oligomer having two or more ionizing radiation-curable functional groups in the molecule and at least a (meth)acryloyl group as the functional group. Examples include a urethane(meth)acrylate oligomer, an epoxy(meth)acrylate oligomer, a polyester(meth)acrylate oligomer, a polyether(meth)acrylate oligomer, a polycarbonate(meth)acrylate oligomer, or an acrylic(meth)acrylate oligomer.

In addition, other examples of the polymerizable oligomer include: a highly hydrophobic polybutadiene(meth)acrylate-based oligomer with a (meth)acrylate group in the side chain(s); a silicone (meth)acrylate-based oligomer with a polysiloxane linkage in the main chain; an aminoplast resin (meth)acrylate-based oligomer obtained by modifying an aminoplast resin having many reactive groups in a small molecule; or an oligomer with a cationic polymerizable functional group in the molecule such as a novolac epoxy resin, a bisphenol epoxy resin, aliphatic vinylether, and aromatic vinylether.

These polymerizable oligomers may be used singly or the multiple kinds thereof may be used in combination.

From the viewpoint of stabilizing wrinkle formation to enhance stable matte effect, from the viewpoint of improving the rough touch, and in addition from the viewpoint of improving the surface properties such as post-processing properties, scratch resistance, and weather resistance, preferred is a urethane (meth)acrylate oligomer, an epoxy (meth)acrylate oligomer, a polyester (meth)acrylate oligomer, a polyether (meth)acrylate oligomer, a polycarbonate (meth)acrylate oligomer, or an acrylic(meth)acrylate oligomer. More preferred is a urethane (meth)acrylate oligomer or a polycarbonate (meth)acrylate oligomer. Still more preferred is a urethane (meth)acrylate oligomer.

The number of functional groups in each polymerizable oligomer is preferably 2 or more and 8 or less from the viewpoint of improving stabilizing wrinkle formation to enhance stable matte effect, from the viewpoint of improving the rough touch, and in addition from the viewpoint of improving the surface properties such as processing properties, scratch resistance, and weather resistance, and the upper limit is more preferably 6 or less, still more preferably 4 or less.

From the same viewpoint, the weight average molecular weight of the polymerizable oligomers is preferably from 2,500 to 7,500, more preferably from 3,000 to 7,000, and still more preferably from 3,500 to 6,000. Here, the weight average molecular weight is an average molecular weight measured by GPC analysis and calculated in terms of standard polystyrene.

In the present embodiment, it is preferable to use a combination of the above polymerizable oligomer(s) and polymerizable monomer(s) as the resin for forming a matte layer. In this case, the polymerizable oligomer is preferably a polyfunctional urethane(meth)acrylate oligomer and more preferably a polyfunctional urethane acrylate oligomer; and the polymerizable monomer is preferably a polyfunctional polymerizable monomer, more preferably a polyfunctional (meth)acrylate monomer, and still more preferably a polyfunctional acrylate monomer. By stabilizing wrinkle formation, the matte effect can be stably enhanced, the rough touch can be improved, and the surface properties such as processing properties, scratch resistance, and weather resistance can be further increased.

When used in combination, from the same viewpoint, the content of the polymerizable oligomer per total 100 parts by mass of the polymerizable oligomer and the polymerizable monomer is preferably 40 parts by mass or larger, more preferably 50 parts by mass or larger, still more preferably 55 parts by mass or larger, and still more preferably 60 parts by mass or larger, and the upper limit is preferably 90 parts by mass or less, more preferably 80 parts by mass or less, and still more preferably 70 parts by mass or less. The polymerizable oligomers may also be used in combination. It is preferable to use a combination of two kinds of polymerizable oligomers with different numbers of functional groups. In this case, the content of the polymerizable oligomer with a larger number of functional groups based on the total 100 parts by mass of the polymerizable oligomers is preferably 50 parts by mass or larger, more preferably 55 parts by mass or larger, still more preferably 60 parts by mass or larger, and still more preferably 65 parts by mass or larger.

(Resin Composition)

The matte layer is preferably composed of a cured resin composition containing the above wrinkle formation stabilizer in a predetermined content. The resin composition preferably contains the above resin and the above wrinkle formation stabilizer in a specified content. The resin composition used in the present embodiment may contain, in addition to the above wrinkle formation stabilizer and resin, another component(s) depending on the desired performance and other factors.

The resin composition for forming a matte layer may contain monofunctional (meth)acrylate, for example, to reduce its viscosity. The monofunctional (meth)acrylate may be used singly or the multiple kinds thereof may be used in combination.

Meanwhile, in the case where the above resin is a UV curable resin that can be cured by UV light, it is preferable to include an additive(s) such as a photopolymerization initiator and/or a photopolymerization-promoting agent. By including the additive(s), the resin can be cured with UV light (without ionizing radiation), and as a result, surface properties fit for practical use can be obtained.

Examples of the photopolymerization initiator include at least one compound selected from acetophenone, benzophenone, α-hydroxyalkylphenone, Michler ketone, benzoin, benzyl dimethyl ketal, benzoyl benzoate, an α-acyl oxime ester, or thioxanthone.

The photopolymerization-promoting agent reduces the inhibition of polymerization by air during curing and accelerates the curing speed. Examples include at least one compound selected from a p-dimethylaminobenzoic acid isoamyl ester or a p-dimethylaminobenzoic acid ethyl ester.

The matte layer is a layer that can be provided on the top surface of a matte article of the present embodiment. Thus, the layer preferably has weather resistance. For example, it is desirable to include each weathering agent such as a UV absorber or a light stabilizer.

The UV absorber used is not particularly limited and may be a UV absorber commonly used for decorative materials, decorative sheets, and others. Examples include a benzotriazole-based UV absorber, a benzophenone-based UV absorber, a triazine-based UV absorber, or a hydroxyphenyltriazine-based UV absorber. The light stabilizer used is not particularly limited and may be a light stabilizer commonly used for decorative materials, decorative sheets, and others. Examples include a hindered amine-based light stabilizer such as a piperidinyl sebacate-based light stabilizer. Here, the UV absorber or light stabilizer may also have an ethylenic double bond-containing reactive functional group(s) such as a (meth)acryloyl group, a vinyl group, and an allyl group in the molecule.

The weathering agent such as a UV absorber, and a light stabilizer may be used singly or a plurality of the kinds may be used in combination.

[60° gloss value]

The matte article of the present embodiment is an article with excellent matte effect visibility and texture. As used herein, the term "matte" means that gloss is unlikely to be seen. It is difficult to make a general statement because it depends on the color tone and pattern of the article. For example, a 60° gloss value of 20.0 or less and preferably about 10.0 or less is generally considered to be "matte".

Until now, it has been possible to obtain excellent matte effect visibility with a 60° gloss value of 20.0 or less and preferably 10.0 or less while using a matting agent for, for example, black or other dark-colored matte article ((the term "dark color" refers to a color with low brightness, for example, an L* value (hereinafter, sometimes simply referred to as "L* value") of usually about 40 or less and preferably 30 or less in the CIE (International Commission on Illumination) L*a*b* color system as measured in accordance with JIS Z8781-4:2013). However, a large amount of matting agent may be used. This causes stripes or roughness during layer formation, so that the manufacturing is uneasy and the surface properties deteriorate. For example, for the matte article with a color other than black or other dark colors, there is a lower limit of the 60° gloss value even when a matting agent is used. The same applies to a black-colored matte article. In any case, it has been uneasy to obtain a matte article with excellent surface properties as well as matte effect visibility and texture. This tendency becomes more pronounced as the 60° gloss value decreases.

In the matte article of the present embodiment, two types of wrinkle formation stabilizers each having a given average particle size are used in combination, and their content is small as described above. This results in not only stable and extremely excellent matte effect visibility and texture, but also a rough touch. In addition, the amount of wrinkle formation stabilizer used may be decreased to a tiny amount to prevent a significant increase in the viscosity of the resin composition, and thereby layer formation becomes easier, and naturally provides excellent surface properties such as stain resistance, scratch resistance, and weather resistance in accordance with the characteristics of resin used for the matte layer.

In the matte article of the present embodiment, the 60° gloss value may change depending on the color tone as previously described, and therefore cannot be uniformly defined. For example, in the case where the matte article has a black or other dark color, the 60° gloss value on the matte layer side can be 10.0 or less, 7.5 or less, 5.0 or less, 4.0 or less, 3.6 or less, or 2.0 or less, and thus extremely excellent matte effect visibility can be developed.

The above 60° gloss value can also be obtained for a matte article with a color other than black or other dark colors. The 60° gloss value on the matte layer side of the matte article of the present embodiment is substantially the same as the 60° gloss value on the surface of the layer that forms the top surface of the matte article. Unless there is another layer, the value of interest is the 60° gloss value of the surface of the matte layer. When another additional layer is further provided, and this additional layer is provided over the surface side of the matte layer, the 60° gloss value mean the 60° gloss value of the additional layer. The matte article of the present embodiment has a specific 60° gloss value substantially due to the structure of the matte layer.

As used herein, the 60° gloss value on the matte layer side refers to a 60° specular gloss measured in accordance with JIS K 5600-4-7:1999. The value is obtained by averaging values at any 10 points as measured from the matte layer side by using, for instance, a gloss meter.

[Additional layer]

The matte article of the present embodiment may include, in addition to the above matte layer and base material, an additional layer(s) such as a primer layer, a transparent resin layer, a decorative layer, and/or an adhesive layer as needed. Figs. 5 and 6 are each a cross-sectional view illustrating a matte article with these layers according to an embodiment of the present embodiment. Figs. 5 and 6 are cross-sectional views of a matte article according to an embodiment of the present embodiment, and are cross-sectional views obtained by cutting the matte article 10 in a plane parallel to the thickness direction (the Z direction in each of the drawings).

The matted decorative material 10 shown in Fig. 5 includes, in sequence, a base material 12 and a matte layer 11. The matte article 10 shown in Fig. 6 include, in sequence, a base material 12, a decorative layer 13, an adhesive layer 14, a transparent resin layer 15, a primer layer 16, and a matte layer 11.

(Primer layer)

For example, in the case where the matte article of the present embodiment is composed of multiple layers, the matte article may include a primer layer to improve interlayer adhesion between the multiple layers.

In the case where the matte article of the present embodiment has a layer(s) other than the matte layer, for example, in the case where a matte layer and a base material are included, a primer layer may be provided between the matte layer and the base material to improve interlayer adhesion.

The primer layer may consist essentially of a binder resin and may optionally contain an additive(s) such as a UV absorber and/or a light stabilizer.

Preferable examples of the binder resin include a resin such as a urethane resin, an acrylic polyol resin, an acrylic resin, an ester resin, an amide resin, a butyral resin, a styrene resin, a urethane-acrylic copolymer, a polycarbonate-based urethane-acrylic copolymer (a urethane-acrylic copolymer derived from a polymer (polycarbonate polyol) having a carbonate linkage in the polymer main chain and two or more hydroxyl groups at the terminals or the side chains), a vinyl chloride-vinyl acetate copolymer resin, a vinyl chloride-vinyl acetate-acrylic copolymer resin, a chlorinated propylene resin, a nitrocellulose resin (nitrocellulose cotton), or a cellulose acetate resin. They may be used singly, or a plurality of the kinds may be used in combination.

The binder resin may also be obtained by adding a curing agent such as an isocyanate-based curing agent and an epoxy-based curing agent to the above resin(s), followed by cross-linking and curing. Among them, the binder resin is preferably obtained by cross-linking and curing a polyol-based resin such as an acrylic polyol resin with an isocyanate-based curing agent. The binder resin is more preferably obtained by cross-linking and curing an acrylic polyol resin with an isocyanate-based curing agent.

The thickness of the primer layer is preferably from 0.1 $\mu$m to 10 $\mu$m, more preferably from 1 $\mu$m to 8 $\mu$m, and still more preferably from 2 $\mu$m to 6 $\mu$m.

In the matte article of the present embodiment, for the purpose of improving adhesion to an adherend such as a resin molding to which the matte article is laminated, a primer layer (also called a "backside primer layer") may be provided on the opposite side of at least one the surface of the matte layer which has wrinkles, or, in the case with a base material, on the side opposite to the matte layer side of the base material.

(Transparent resin layer)

The matte article of the present embodiment may have a transparent resin layer in order to increase its strength, and, in the case where a decorative layer is provided, from the viewpoint of protection of the decorative layer, etc. In the case with a base material, the transparent resin layer may be provided between the base material and the matte layer. In the case with a decorative layer, the transparent resin layer may be provided between the decorative layer and the matte layer to protect the decorative layer.

Examples of a resin constituting the transparent resin layer include a polyolefin-based resin, a polyester resin, a polycarbonate resin, an acrylonitrile-butadiene-styrene resin (hereinafter, also referred to as "ABS resin"), an acrylic resin, or a vinyl chloride resin. Among them, a polyolefin-based resin or a vinyl chloride resin is preferred from the viewpoint of, for instance, suitability for post-processing. Two or more kinds of these respective resins may be laminated or mixed and used.

The transparent resin layer may be transparent enough to visually recognize a side closer to the base material relative to the transparent resin layer. In the case with a decorative layer, the transparent resin layer may be transparent enough to visually recognize the decorative layer. The transparent resin layer may be colored and transparent or semi-transparent other than colorless and transparent. In other words, the term "transparent" in the present disclosure means and includes not only colorless and transparent but also colored and transparent or semi-transparent.

The transparent resin layer may contain a weathering agent such as a UV absorber and a light stabilizer and/or an additive such as a colorant.

From the viewpoint of the protection of the decorative layer and considering the suitability for post-processing, for example, the thickness of the transparent resin layer is preferably from 20 $\mu$m to 150 $\mu$m, more preferably from 40 $\mu$m to 120 $\mu$m, and still more preferably from 60 $\mu$m to 100 $\mu$m.

(Decorative layer)

The matte article of the present embodiment may have a decorative layer from the viewpoint of improving the design. The decorative layer may be provided on the side opposite to at least one side of the wrinkled surface of the matte layer. In the case with a base material, the decorative layer may be placed between the base material and the matte layer. Also, in the case with a transparent resin layer, the decorative layer, the transparent resin layer, and the matte layer may be provided in this order.

The decorative layer may be, for example, a colored layer covering the entire surface (so-called solid colored layer, "13a" in Fig. 6) or a patterned layer ("13b" in Fig. 6) formed by printing various patterns while using inks and a printing machine. As shown in Fig. 6, a solid colored layer and a patterned layer may also be used in combination.

The pattern (design) of the patterned layer may be any desired pattern without any restrictions. Examples include: a wood grain pattern (e.g., annual rings, conduit grooves) on a wood plate surface; a stone grain pattern on the surface of marble, granite or other stone slabs; a fabric grain pattern on a fabric surface; a skin grain pattern on a leather surface; or a geometric pattern, a letter(s), or a figure(s), or a combination thereof.

The ink(s) used for the decorative layer may be obtained by mixing the binder resin with, if appropriate, a colorant such as a pigment and a dye, a body pigment, a solvent, a stabilizer, a plasticizer, a catalyst, a curing agent, a UV absorber, and/or a light stabilizer.

Examples of the binder resin for the decorative layer include, but are not particularly limited to, a resin such as a urethane resin, an acrylic polyol resin, an acrylic resin, an ester resin, an amide resin, a butyral resin, a styrene resin, a urethane-acrylic copolymer, a vinyl chloride-vinyl acetate copolymer resin, a vinyl chloride-vinyl acetate-acrylic copolymer resin, a chlorinated propylene resin, a nitrocellulose resin, or a cellulose acetate resin. In addition, it is possible to use each type of resin such as a one-component curable resin or a two-component curable resin with a curing agent such as an isocyanate compound.

A pigment with excellent opacity and weather resistance is preferable as a colorant. The pigment used may be the same as those exemplified as a pigment that can be used for the base material.

The content of the colorant based on 100 parts by mass of the resin constituting the decorative layer is preferably from 5 to 90 parts by mass, more preferably from 15 to 80 parts by mass, and still more preferably from 30 to 70 parts by mass.

The decorative layer may contain a weathering agent such as a UV absorber and a light stabilizer and/or an additive such as a colorant.

The thickness of the decorative layer may be selected, if appropriate, according to the desired pattern. From the viewpoint that the base color of the adherend is concealed and the design is improved, the thickness is preferably from 0.5 $\mu$m to 20 $\mu$m, more preferably from 1 $\mu$m to 10 $\mu$m, and still more preferably from 2 $\mu$m to 5 $\mu$m.

(Adhesive)

When the matte article of the present embodiment have a base material and a transparent resin layer, an adhesive layer may be present between the base material and the transparent resin layer to improve adhesion between the two layers.

In the case where a decorative layer is further provided between the base material and the transparent resin layer, the positional relationship between the adhesive layer and the decorative layer is not particularly limited. Specifically, the decorative layer, the adhesive layer, and the transparent resin layer may be provided in this order from the side near the base material. Alternatively, the adhesive layer, the decorative layer, and the transparent resin layer may be provided in this order from the side near the base material.

The adhesive layer may be composed of an adhesive such as a urethane-based adhesive, an acrylic adhesive, an epoxy-based adhesive, a rubber-based adhesive, and the like. Among these adhesives, a urethane adhesive is preferred in terms of adhesion strength.

Examples of the urethane-based adhesive include an adhesive using a two-component curable urethane resin containing each polyol compound such as polyether polyol, polyester polyol, and acrylic polyol, and a curing agent such as an isocyanate compound.

From the viewpoint of efficiently achieving a desired adhesion strength, the thickness of the adhesive layer is preferably from 0.1 $\mu$m to 30 $\mu$m, more preferably from 1 $\mu$m to 15 $\mu$m, and still more preferably from 2 $\mu$m to 10 $\mu$m.

The matte article of the present embodiment may have a base material made of a non-transparent material, and/or a decorative layer. Thus, the matte article of the present embodiment may have a low total light transmittance. Specifically, the total light transmittance of the matte article of the present embodiment as measured in accordance with JIS K7361-1: 1997 is preferably 20% or less, more preferably 15% or less, and still more preferably 10% or less.

As used herein, the total light transmittance of a matte article is a total light transmittance measured in accordance with JIS K7361-1:1997, and the values measured at any 10 points are averaged.

[Method for producing matte article]

The first method for producing a matte article according to the present embodiment includes a matte layer formation step of forming a matte layer by irradiating a layer of a resin composition for forming the matte layer that contains the above resin and wrinkle formation stabilizer with light at a wavelength of at least 100 nm or more and 380 nm or less.

The first production method makes it possible to produce a matte article with the structure of such a laminate obtained by laminating a plurality of layers, such as laminates shown in Figs. 5 and 6, each of which have a base material and the above surface shape on at least part thereof, for example, a cured resin composition layer as a matte layer. For example, a matte article with a base material and a matte layer can be produced when the above resin composition for forming a matte layer is applied on a base material to form a resin composition layer on the base material, and the above irradiation is performed to form a matte layer. The first production method is suitable for producing a matte article having a matte effect such that the 60° gloss value on the matte layer side is 20.0 or less, 10.0 or less, or even lower, and also have a rough touch, as a result that the matte article has the above surface shape due to the matte layer (the surface on the matte layer side being provided with the above surface shape).

The method for producing a matte article according to the present embodiment makes it possible to easily obtain the matte article of the present embodiment as already described. Specifically, for the formation of the matte layer, a resin composition for matting that contains a wrinkle formation stabilizer for forming a matte layer is irradiated with UV light with a short wavelength of at least 100 nm or more and 380 nm or less. This allows for the formation of wrinkles on at least one of the surfaces of the matte layer, thereby capable of imparting a matte effect and a rough touch to the matte article (matte layer).

Although the details of the mechanism by which irradiating the resin composition for forming a matte layer with UV light with such a short wavelength causes the formation of wrinkles on at least one surface of the matte layer, thereby developing a matte effect and a rough touch are unclear, the following mechanism is assumed.

When a coating layer coated with a resin composition for forming a matte layer at a given thickness is irradiated with UV light with a short wavelength, the energy of the UV light to penetrate only the surface area, and no energy reaches a layer(s) lower than the area. Accordingly, only the surface area containing the resin composition starts to cure. Therefore, it is considered that only the surface is cured and shrinks, resulting in the formation of wrinkles. In this way, the formation of wrinkles is considered to occur in a state where the surface of the resin composition for forming a matte layer is cured only in a certain thickness direction by irradiation with UV light at a short wavelength.

From the comparison with the below-described Examples and Comparative Examples, the wrinkle formation becomes unstable when no wrinkle formation stabilizer is included, and the matte effect visibility and texture are thus unstable and insufficient over the entire surface of the matte layer, thereby the rough touch is not adequately exhibited. Therefore, the stable appearance of the matte effect and the rough touch cannot be explained only by the curing of only the surface area by short-wavelength UV light. In other words, it is essential to include a wrinkle formation stabilizer in order to develop a matte effect and a rough touch caused by wrinkles stably provided on the matte article of the present embodiment. Considering that neither a stable matte effect nor a rough touch caused by the wrinkle formation is obtained in the case without any wrinkle formation stabilizer, the wrinkle formation stabilizer functions like a wrinkle formation-triggering nucleus. It is considered that, centered on the nucleus, the resin of the surface area containing the above resin composition gathers to form wrinkle convex portions (protrusion portions) and concave portions along with the formation of the convex portions (protrusion portions), resulting in stable formation of wrinkles and stably eliciting a matte effect and a rough touch.

The wrinkle formation stabilizer used in the production method of the present embodiment and the resin composition for forming a matte layer that contains the wrinkle formation stabilizer are the same as those described above as the resin composition for forming a matte layer and the wrinkle formation stabilizer that may be used in the above matte decorative materials in the present embodiment.

In the production method of the present embodiment, the resin composition for forming a matte layer is irradiated with light at a wavelength of at least 100 nm or more and 380 nm or less. This irradiation can cause the energy of the UV light to penetrate only the surface area as already described. Since the energy does not reach the lower layers, only the surface area containing the resin composition starts curing. Therefore, only the surface is cured and shrinks, thus the formation of wrinkles is stabilized. As a result, the surface of the resin composition layer becomes a cured product and constitutes the matte layer. After that, curing progresses from the near surface area to deep inner area, where curing is slower, in the depth direction, and thereby the resin composition layer becomes a cured product. Accordingly, the resin composition is cured over its entire thickness, and this causes the resin composition layer to constitute a matte layer with wrinkles where a light diffusion effect is expressed on the surface and a rough touch is developed. From the viewpoint of accelerating the progress of curing to the deep inner area, it is preferable to perform irradiation with light at a wavelength of 100 nm or more and 380 nm or less, followed by additional other irradiation treatment as described below.

Examples of the light at a wavelength of at least 100 nm or more and 380 nm or less include "excimer light," which includes light in the ultraviolet wavelength range from a dimer in an excited state, i.e., excimer, formed by the discharge of rare gas such as Ar, Kr, Xe, and Ne, halides of rare gas by halogen such as F, Cl, I and Br, or a mixture of these gases. Examples of the wavelength of excimer light and excimer as a light source include light at a wavelength of 126 nm as emitted from an excimer $Ar_2$ (hereinafter, referred to as "126 nm ($Ar_2$)). Wavelength light such as 146 nm ($Kr_2$), 157 nm ($F_2$), 172 nm ($Xe_2$), 193 nm (ArF), 222 nm (KrCl), 247 nm (KrF), 308 nm (XeCl), or 351 nm (XeF) can be preferably employed. As excimer light, either spontaneous emission light or laser light with high coherence (interference) due to induced emission can be used. However, natural emission light is usually sufficient. Note that the light (UV light)-emitting discharge lamp is also called an "excimer lamp".

Excimer light has a single wavelength peak and is characterized by a narrower half-width of wavelength than ordinary UV light (e.g., UV light emitted from a metal halide lamp, a mercury lamp, etc.). The use of such excimer light stabilizes the formation of wrinkles, and thereby a matte effect is stably enhanced and a rough touch is also improved.

From the viewpoint of stabilizing the wrinkle formation to stably enhance the matte effect and improving the rough touch, the wavelength is preferably 120 nm or longer, more preferably 140 nm or longer, still more preferably 150 nm or longer, and still more preferably 155 nm or longer, and the upper limit is preferably 320 nm or less, more preferably 300 nm or less, still more preferably 250 nm or less, still more preferably 200 nm or less, and most preferably 172 nm ($Xe_2$). As such, in the present embodiment, from the viewpoint of stably enhancing the matte effect and improving the rough touch, it is preferable to use light with a shorter wavelength. More preferred is UV light with an intermediate wavelength (wavelength: 280 to 320 nm) or UV light with a short wavelength (wavelength: 280 nm or less). Still more preferred is UV light with a short wavelength.

From the viewpoints of stabilizing the wrinkle formation to stably enhance the matte effect and to improve the rough touch, the cumulative light amount of light with the above wavelength is preferably 1 $mJ/cm^2$ or larger, more preferably 10 $mJ/cm^2$ or larger, still more preferably 30 $mJ/cm^2$ or larger, and still more preferably 50 $mJ/cm^2$ or larger. In addition, the upper limit is not particularly limited. From the viewpoint that the number of lamps required for emitting wavelength light is reduced and the productivity such as production efficiency is increased, the cumulative light amount is more preferably 1,000 $mJ/cm^2$ or less, more preferably 500 $mJ/cm^2$ or less, and still more preferably 300 $mJ/cm^2$ or less. From the same viewpoint, the UV power density is preferably 0.001 W/cm or higher, more preferably 0.01 W/cm or higher, still more preferably 0.03 W/cm or higher, and the upper limit is preferably 10 W/cm or lower, more preferably 5 W/cm or lower, and still more preferably 3 W/cm or lower.

It is preferable that the oxygen level at the time of irradiation with the above wavelength light is lower. The oxygen level is preferably 1,000 ppm or less, more preferably 750 ppm or less, still more preferably 500 ppm or less, and still more preferably 300 ppm or less.

At the matte layer formation step in the method for producing a matte article according to the present embodiment, in addition to the irradiation with light at a wavelength of at least 100 nm or more and 380 nm or less as described above, additional treatment may be performed that contributes to curing of the resin composition for forming a matte layer.

For example, from the viewpoint of stabilizing the formation of wrinkles caused by the difference in the degree of progression of curing between the surface area and the deep inner area away from the surface in the depth direction, and accelerating the progression of curing at the deep inner area, the resin composition for forming a matte layer may be pre-cured overall by pre-irradiation with light at a wavelength of more than 380 nm, preferably light at a wavelength of about 385 nm or more and 400 nm or less, and then irradiated with light at a wavelength of 100 nm or more and 380 or less, or alternatively may be irradiated with light at a wavelength of 100 nm or more and 380 nm or less, and then post-cured to further cure the resin composition. The presence or absence of pre-curing and/or post-curing may be suitably decided according to the desired properties required for the matte layer (for example, processing characteristics and surface properties including stain resistance). The above wavelength light belongs to UV light, but is not limited to UV light. It is also possible to use other ionizing radiation such as an electron beam. For example, during post curing, an electron beam may be preferably used from the viewpoint of improving the surface properties of the matte layer.

In the production method of the present embodiment, the matte layer may be formed by irradiating, with light at a wavelength of at least 100 nm or more and 380 nm or less, a coating layer (uncured resin layer), which is coated with the resin composition for forming a matte layer by a known technique such as gravure printing, bar coating, roll coating, reverse roll coating, and comma coating.

The matte article obtained by the production method of the present embodiment may include another layer(s), such as a transparent resin layer, in addition to the base material, as described above as a layer(s) that can be employed in the matte article of the present embodiment.

For example, the decorative layer, adhesive layer, or primer layer may be formed by applying a coating liquid containing a composition for forming each layer by the above known technique and, if necessary, drying and curing. In the case of forming a transparent resin layer, a resin film for forming the transparent resin layer may be formed by, for instance, dry lamination.

Among the matte articles of the present embodiment, an article structured by a single layer as shown in Fig. 4, for example, a matte article composed of a cured resin composition and having the above surface shape on one side of its surface, may be produced by the second production method below.

The second production method includes the steps of: applying a resin composition for forming a matte article that contains a resin and a wrinkle formation stabilizer on a release layer of a support sheet having the release layer to form a coating layer; irradiating the coating layer with light at a wavelength of at least 100 nm or more and 380 nm or less; and peeling off the support sheet.

The support sheet may be suitably selected from those exemplified as optionally used as the above base material. For example, a base material made of a fibrous material, preferably paper such as high-quality paper may be used. It is easy to peel off the support sheet from the matte article after the resin composition is made into a matte article, the handling is easy as well as cost-effective.

The release layer is a layer provided to facilitate the removal of the support sheet from a matte article after the resin composition is made into the matte article. The release layer excels in releasability. Examples include those containing an acrylic resin, vinyl chloride-vinyl acetate, an olefin resin, a silicone resin, a fluorine resin, or each silicone or fluorine-modified resin. The release layer may be optionally admixed with wax.

Preferable examples of the wax include each wax such as microcrystalline wax, carnauba wax, paraffin wax, Fischer-Tropsch wax, each low-molecular-weight polyethylene, wood wax, beeswax, whale wax, insect wax, wool wax, shellac wax, candelilla wax, petrolatum, partially modified wax, a fatty acid ester, or a fatty acid amide.

The resin composition for forming a matte article that contains a resin and a wrinkle formation stabilizer may be adopted from the resins and wrinkle formation stabilizers exemplified as those that can be used for the resin composition for forming a matte layer. In addition, the content of wrinkle formation stabilizer, for instance, is also the same as that of the resin composition for forming a matte layer.

The resin composition for forming a matte article may be applied like the application of the resin composition for forming a matte layer as described above. The method of irradiating the coating layer with light at a wavelength of at least 100 nm or more and 380 nm or less is like the irradiation of a layer containing the resin composition for forming a matte layer.

The thickness of the coating layer is the thickness of the matte article as it is. The thickness of the coating layer should be determined according to the desired thickness and is not particularly limited. The thickness may be selected from a range from 1 $\mu$m to 10 cm, which is the widest thickness of the above base material. In view of, for instance, the suitability for manufacturing and handling, the thickness of the coating layer is preferably 3 $\mu$m or larger and more preferably 5 $\mu$m or larger, and the upper limit is preferably 300 $\mu$m or less and more preferably 200 $\mu$m or less.

A decorative layer may be provided to improve the design before formation of the coating layer containing a resin composition for forming a matte article. Thus, in the case of a single layer structure as shown in Fig. 4, the matte article may further include a decorative layer. The decorative layer may be structured like the decorative layer described above as the layer that can be included in the above matte article having a base material and a matte layer.

By irradiating the coating layer of the resin composition for forming a matte article with light at the above wavelength, the surface is cured and shrinks in the same manner as the above matte layer. Thereby, the formation of wrinkles is stabilized, and the resin composition surface layer becomes a cured product with the above surface shape. Furthermore, curing progresses from the surface to the deep inner area, where curing is slower, in the depth direction, and the resin composition is totally cured. Accordingly, a matte article having the above surface shape on at least a part of the surface is produced.

In addition, regarding irradiation, post-curing or pre-curing may be performed to accelerate curing in the deep inner area.

By irradiating light at the above predetermined wavelength to cure a coating layer of the resin composition for forming a matte article, and the peeling off the support sheet, a matte article having the above surface shape on at least a part of the surface can be obtained.

Among the matte articles of the present embodiment, an article structured by a single layer as shown in Fig. 4, for example, a matte article having the above surface shape on at least a part of the surface of a resin product such as a resin molding, may be produced by the third production method below.

The third production method includes the step of embossing at least a part of the surface of a resin molding by using, for instance, an embossing plate or shaped sheet to give the above surface shape.

The embossing plate or shaped sheet may be used without any particular restriction so as to be able to impart the above surface shape. The surface shape of embossing plate or shaped sheet is a shape opposite to the surface shape having been imparted. Specifically, the shape of a concave portion to the shaped sheet serving as a convex portion in the surface shape having been imparted may be such that the absolute value of Spc in the surface shape is more than 4000 mm$^{-1}$, and the Rsm of the shaped sheet may be 30 $\mu$m or more. Note that the numerical values about the surface shape of the shaped sheet or the matte article are, in principle, theoretical numbers. Of course, some errors are included.

Meanwhile, examples of the matte article of the present embodiment include a thermosetting resin decorative sheet such as a high-pressure melamine resin decorative sheet, a low-pressure melamine resin decorative sheet, a diallyl phthalate (DAP) resin decorative sheet, a polyester decorative sheet, a guanamine resin decorative sheet, or a phenolic resin decorative sheet. The thermosetting resin decorative sheet is a decorative sheet obtained by impregnating a fibrous material, for example, paper, a woven or non-woven fabric made of fiber described as a base material that can be employed as the above base material for a matte article, with a liquid uncured thermosetting resin; and by pressure molding or heat-pressure molding the resulting material at, for example, a heating temperature of 100 to 200°C, a pressure of 0.1 to 9.8 MPa, and a molding time of 10 seconds to 120 minutes to give a decorative sheet. When the pressure molding or heat-pressure molding is performed, the base material and the above-mentioned embossing plate or shaped sheet are arranged so that they are laminated, and then molded. Thereby, a decorative sheet as a matte article having the above surface shape is obtained.

In this case, preferable examples of the thermosetting resin impregnated in the base material include a melamine resin, a urea resin, a melamine-urea resin, a guanamine resin, a diallyl phthalate resin, a polyester resin, a phenol resin, an epoxy resin, an amino alkyd resin, a silicon resin, or a polysiloxane resin. Preferred is a thermosetting resin such as a melamine resin, a urea resin, a melamine-urea resin, a guanamine resin, or a sulfonamide resin. Among them, preferred is a melamine resin, a melamine-urea resin, or a phenolic resin. Particularly preferred is a melamine resin.

<Application>

The matte article of the present embodiment is applicable as a decorative member as described below.

In addition, the matte article of the present embodiment may also be used as a shaped sheet. When used as a shaped sheet, the matte article can be used as, for instance, an embossing plate or a shaped sheet used for embossing in the second and/or third production method described above. This can produce the above article structured by a single layer or a thermosetting resin decorative sheet.

The surface shape of the shaped target material (e.g., an article structured by a single layer, a thermosetting resin decorative sheet) should have a shape opposite to the surface shape of the shaped sheet (a matte article of the present embodiment).

[Decorative member]

The matte article of the present embodiment may be used as a decorative member as it is, or may be used as a decorative member obtained by laminating, compositing, or combining an adherend therewith. Which case should be adopted may be determined as desired. When the matte article of the present embodiment is used for a decorative member, the matte article preferably has a decorative layer.

In the case with an adherend, the decorative member has the adherend and the matte article of the present embodiment as described above. Specifically, the surface of the adherend requiring decoration and the surface of the matte layer of the matte article opposite to the one side where wrinkles are formed to develop a matte effect and a rough touch are laminated facing each other. In the case with an adherend, it is also preferable that the matte article of the present embodiment is in a film form or a sheet form in consideration of efficient lamination performance.

On the other hand, the matte article of the present embodiment is suitable when an article with a single layer structure, as illustrated in Fig. 4, is used as it is as a decorative member. Among them, a matte article having the above surface shape on at least a part of the surface of a resin article such as a resin molding is particularly suitable. When the matte article of the present embodiment is used as it is as a decorative member, it is suitable for use as a decorative member constituting a surface of, for instance, buildings, various furniture, vehicles, or home appliances.

Of the articles structured by a single layer as shown in Fig. 4, the matte article composed of the cured resin composition for forming a matte article as obtained by the second production method described above may be used as it is as a decorative member, or may be used in combination with an adherend, depending on its thickness.

(Adherend)

Examples of the adherend include a plate member such as a flat plate, a curved plate, a three-dimensional object like a cylinder and a polygonal column, or a sheet (or film), which are made of various raw material. Examples include: a wood member used as, for instance, a plate member or a three-dimensional object like a wood fiberboard such as a wood veneer, a wood plywood, a laminated wood, a particleboard, and a MDF (medium density fiberboard) made of each type of wood such as cedar, cypress, pine, and lauan; a metal member used as, for instance, a plate member, three-dimensional object, or sheet made of metal such as iron, aluminum, copper, and alloy containing one or more of these metals; a ceramic member used as, for instance, a plate member or three-dimensional object made of non-ceramic ceramic system material such as glass, ceramic like pottery, gypsum, cement, ALC (lightweight foamed concrete), and calcium silicate series; or a resin member used as, for instance, a plate member, three-dimensional object, or sheet made of resin such as an acrylic resin, polyester resin, polystyrene resin, polyolefin resin like polypropylene, ABS (acrylonitrile-butadiene-styrene copolymer) resin, phenolic resin, polyvinyl chloride resin, cellulose resin, and rubber. These members may be used singly, or a plurality of the kinds may be used in combination.

The adherend may be selected, if appropriate, from the above according to its application. When the application involve: an interior member for buildings such as a wall, ceiling, and floor; an exterior member such as an exterior wall, roof, eaves ceiling, fence, and gate; or a fixture or fitting member such as a window frame, door, handrail, baseboard, trim, and molding, the adherend is preferably made of at least one member selected from the wood member, the metal member, and the resin member. When the application involve an exterior member such as an entrance door, a window frame, or a fixture such as a door, the adherend is preferably made of at least one member selected from the metal member and the resin member.

The thickness of the adherend may be selected, if appropriate, according to the application and material, and is preferably from 0.1 mm to 100 mm, more preferably from 0.3 mm to 5 mm, and still more preferably from 0.5 mm to 3 mm.

(Adhesive layer)

It is preferable that the adherend and the matte article are attached via an adhesive layer to obtain excellent adhesion.

The adhesive used for the adhesive layer is not particularly limited, and any known adhesive can be used and may be suitably selected depending on its usage. Preferable examples of the adhesive include a moisture-curing adhesive, an anaerobic curing adhesive, a dry-curing adhesive, a UV-curing adhesive, a thermally sensitive adhesive (e.g., a hot melt adhesive), or a pressure-sensitive adhesive.

Examples of a resin used for each adhesive include an acrylic resin, a urethane resin, a vinyl chloride resin, a vinyl acetate resin, a vinyl chloride-vinyl acetate copolymer, a styrene-acrylic copolymer, a polyester resin, an amide resin, a cyanoacrylate resin, or an epoxy resin. They may be used singly, or a plurality of the kinds may be used in combination. In addition, it is possible to use an ester-based adhesive or a two-component urethane-based curable adhesive using, for instance, an isocyanate compound as a curing agent.

Further, a bonding agent may also be used for the adhesive layer. The bonding agent used may be selected, if appropriate, from each bonding agent such as an acrylic, urethane-based, silicone-based, and rubber-based bonding agent.

The thickness of the adhesive layer is not particularly limited. From the viewpoint of obtaining excellent adhesion, the thickness is preferably from 1 $\mu$m to 100 $\mu$m, more preferably from 5 $\mu$m to 50 $\mu$m, and still more preferably from 10 $\mu$m to 30 $\mu$m.

(Method for producing decorative member)

The decorative member may be produced through the step of laminating a matte article of the present embodiment and an adherend.

This step is a step of laminating an adherend and a matte article of the present embodiment. The surface of the adherend requiring decoration and the surface of the matte layer of the matte article opposite to the one side where wrinkles are formed to develop a matte effect and a rough touch, or the side of the base material if a matte article of the present embodiment has the base material, are laminated facing each other. Examples of the method of laminating an adherend and a matte article includes a lamination method in which a matte article is laminated, via an adhesive layer, onto a plate-shaped adherend by applying pressure with a pressurizing roller.

In the case where a hot melt adhesive (heat-sensitive adhesive) is used as an adhesive, the heating temperature depends on the type of resin included in the adhesive, and is preferably from 160°C to 200°C. For a reactive hot melt adhesive, the heating temperature is preferably from 100°C to 130°C. In addition, vacuum forming may be generally performed while heating. This temperature is preferably from 80°C to 130°C and more preferably from 90°C to 120°C.

The decorative member obtained in the above manner may be cut as desired, and then the surface and the wood end portion may be decorated with grooves, chamfers, etc., by using a router, a cutter, or another cutting machine. The decorative member is suitable for various applications, for example, interior members of buildings such as walls, ceilings, and floors; exterior members such as exterior walls, eaves ceilings, roofs, fences, and rails; fixture or fitting members such as window frames, doors, door frames, railings, baseboards, trims, and moldings; general furniture such as chests, shelves, and desks; kitchen furniture such as dining tables, and sinks; surface decorative boards such as cabinets for home appliances and OA equipment; vehicle interior or exterior members; and so on.

In addition to the above decorative members used for buildings and the like, the matte article of the present embodiment can be used for packaging materials, antidazzle films for displays, whiteboards or blackboards, credit cards, cash cards, telephone cards, various types of cards such as various certificates, keyboards of various keyboards, windows, doors, transparent boards (e.g., window glass) for partitions, artificial leather, etc., as a single form, or in a laminated, composite, or combined form with another material(s) (e.g., an adherend). In these applications, it is preferable that the matte article of the present embodiment developing a matte effect and a rough touch is usually placed on the topmost surface. Other forms of use are of course possible, depending on, for instance, the application and usage.

Examples

Next, the present disclosure will be further described in detail with reference to Examples. The present disclosure, however, is no way limited to these Examples.

(Measurement method of surface shape)

The Spc (arithmetic mean curvature of protrusion vertexes), Rsm (average length of curve elements), Rz (maximum height) and Ra (arithmetic mean roughness) of the article obtained in each of Examples and Comparative Examples were measured on each rectangle (1024 $\mu$m $\times$ 768 $\mu$m) of any part of the surface shape of the article while using a shape analysis laser microscope ("VK-X150 (control unit)/VK-X160 (measurement unit)"; manufactured by Keyence Corporation) with a 50$\times$ objective lens under conditions at a laser wavelength: 658 nm, a measurement mode: surface shape mode, a measurement pitch: 0.13 $\mu$m, and measurement quality: high-speed mode.
The cutoff values for Rsm (average length of curve elements), Rz (maximum height), and Ra (arithmetic mean roughness) were each set to 0.8 mm.

(Evaluation method: 60° gloss value)

A gloss meter ("Micro-Gloss (model name)"; manufactured by BYK Gardner, Inc.) was used to measure the 60° specular gloss of the article obtained in each of Examples and Comparative Examples in accordance with K 5600-4-7:1999.

(Evaluation of texture (evenness of surface condition))

Given 20 adults were instructed to evaluate the surface texture (evenness of surface condition) of the article obtained in each of Examples and Comparative Examples under the following criteria.

A: 18 or more persons evaluated that the surface condition was even, and the matte effect visibility was high.
B: 15 or more and 17 or less persons evaluated that the surface condition was even, and the matte effect visibility was high.
C: 14 or less persons evaluated that the surface condition was even, and the matte effect visibility was high.

(Evaluation of rough touch)

While an oxford fabric with 40-count cotton yarn was used as a touch reference, which is a reference for a rough touch, given 20 adults were instructed to evaluate the surface touch of the article obtained in each of Examples and Comparative Examples under the following criteria.

A: 18 or more persons evaluated that the touch was close to the reference and was a rough touch.
B: 15 or more and 17 or less persons evaluated that the touch was close to the reference and was a rough touch.
C: 14 or less persons evaluated that the touch was close to the reference and was a rough touch.

[Example 1]

(Preparation of resin composition for forming matte layer)

60 parts by mass of a polyfunctional urethane acrylate oligomer (number of functional groups: 4), 30 parts by mass of a polyfunctional acrylate monomer (bifunctional), and 10 parts by mass of a monofunctional acrylate monomer were mixed, and 3 parts by mass of a wrinkle formation stabilizer (silica particles, average particle size: 5 nm) and 0.8 parts by mass of a photopolymerization initiator (benzophenone) were added. Thereby, a resin composition A for forming a matte layer was obtained.

(Production of matte article)

Colored thin base paper for building materials (thickness: 30 $\mu$m) was used as a base material. A colored layer

(thickness: 3 μm (when dried)) was applied onto one side of the base material, and then the resin composition A for forming a matte layer was applied onto the colored layer by gravure printing (coating amount: 5 μm (when dried)). Then irradiating with UV light (wavelength: 395 nm, UV dose: 0.6 W/cm$^2$) using a UV irradiation device including an LED; then irradiating with UV light (wavelength: 172 nm (Xe$_2$), UV light output density: 1 W/cm, cumulative light amount: 10 to 100 mJ/cm$^2$, nitrogen atmosphere (oxygen level: 200 ppm or less)) using an excimer light irradiation device; and further irradiating using a high-pressure mercury lamp (UV light output density: 200 W/cm). Thereby, a matte article having the base material and the matte layer was obtained. The Spc (arithmetic mean curvature of protrusion vertexes), Rsm (average length of curve elements) and 60° gloss value of the obtained matte article were measured, and the texture (evenness of surface condition) was evaluated and the rough touch was evaluated. Table 1 shows the results.

[Comparative Example 1]

A PET sheet (Cosmoshine (registered trademark) A4160 (50 μm) manufactured by Toyobo Co., Ltd.) was used as a base material. A matte article was obtained in a manner that: applying the resin composition A for forming a matte layer obtained in Example 1, to an easy-adhesion surface of the base material, by gravure printing (coating amount: 18 μm (when dried)); and then irradiating with UV light using a UV irradiation device including an LED, irradiating with UV light using an excimer light irradiation device, and irradiating using a high-pressure mercury lamp in the same manner as in Example 1.

[Comparative Example 2]

A matte article was obtained in the same manner as in Comparative Example 1 except that the coating amount of the resin composition A for forming a matte layer was 5 μm (when dried).

[Comparative Example 3]

A polypropylene sheet (PP, thickness: 100 μm) treated with corona discharge treatment was used as a base material. A matte layer was obtained in a manner that: applying a resin composition for forming a primer layer (urethane resin, coating amount :2 μm (when dried)), on one side of the base material; applying the resin composition A for forming a matte layer onto the primer layer (coating amount: 5 μm (when dried)); and then irradiating with UV light using a UV irradiation device including an LED, irradiating with UV light using an excimer light irradiation device, and irradiating using a high-pressure mercury lamp in the same manner as in Example 1.

[Comparative Example 4]

A matte article was obtained in the same manner as in Comparative Example 2 except that no irradiation with UV light using a UV irradiation device including an LED was performed.

[Comparative Example 5]

A matte article was obtained in the same manner as in Comparative Example 1 except that a resin composition B for forming a matte layer, obtained by mixing 60 parts by mass of a polyfunctional urethane acrylate oligomer (number of functional groups: 7), 30 parts by mass of a polyfunctional acrylate monomer (bifunctional), and 10 parts by mass of a monofunctional acrylate monomer, and adding 15 parts by mass of a wrinkle formation stabilizer (silica particles, average particle size: 5 nm) and 0.8 parts by mass of a photopolymerization initiator (benzophenone) was used instead of the resin composition A for forming a matte layer obtained in Example 1.

[Comparative Example 6]

A matte article was obtained in the same manner as in Comparative Example 5 except that the coating amount of the resin composition B for forming a matte layer was 5 μm (when dried).

The Spc (arithmetic mean curvature of protrusion vertexes), Rsm (average length of curve elements) and 60° gloss value of the matte article obtained in each of Comparative Examples 1 to 6 were measured, and the texture (evenness of surface condition) was evaluated and the rough touch was evaluated. Table 1 shows the results.

Table 1

| | Example 1 | Comparative Example 1 | Comparative Example 2 | Comparative Example 3 | Comparative Example 4 | Comparative Example 5 | Comparative Example 6 |
|---|---|---|---|---|---|---|---|
| Resin composition for forming matte layer | A | A | A | A | A | B | B |
| Thickness of matte layer ($\mu$m) | 5 | 18 | 5 | 5 | 5 | 18 | 5 |
| Base material | Paper | PET | PET | PP | PET | PET | PET |
| LED-UV | Irradiation | Irradiation | Irradiation | Irradiation | - | Irradiation | Irradiation |
| Spc (mm$^{-1}$) | 4335 | 5251 | 4599 | 5466 | 2193 | 2396 | 1773 |
| Rsm ($\mu$m) | 37.8 | 14.3 | 17.1 | 28.2 | 47.5 | 44.4 | 52 |
| Rz ($\mu$m) | 9.4 | 4.5 | 4.6 | 8.9 | 12.6 | 12.9 | 12.8 |
| Ra ($\mu$m) | 1.5 | 0.9 | 0.8 | 1.5 | 1.9 | 1.6 | 1.4 |
| 60° gloss value | 1.3 | 1.9 | 1.9 | 1.6 | 2.9 | 4.9 | 5.4 |
| Texture | A | A | A | A | C | C | C |
| Rough touch | A | C | C | C | A | A | A |

The results in Table 1 have demonstrated that the matte articles of the present embodiment each have a 60° gloss value of 1.3 on the matte layer side, and the articles have extremely excellent matte effect visibility as well as excellent texture. The articles have also been found to give an excellent rough touch.

In contrast, the matte articles of Comparative Examples 1 to 3 having an Rsm of less than 30 $\mu$m were found to have inferior texture and not to obtain any rough touch. The matte articles of Comparative Examples 4 to 6, having an Rsm of 30 $\mu$m or more, but having an Spc of 4000 mm$^{-1}$ or less, had a 60° gloss value of 2.9 to 5.4 and was found to have further inferior texture as compared with the matte articles of Comparative Examples 1 to 3. The matte articles of Comparative Examples 4 to 6 were found to also exhibit an inferior rough touch as compared with that of Example 1.

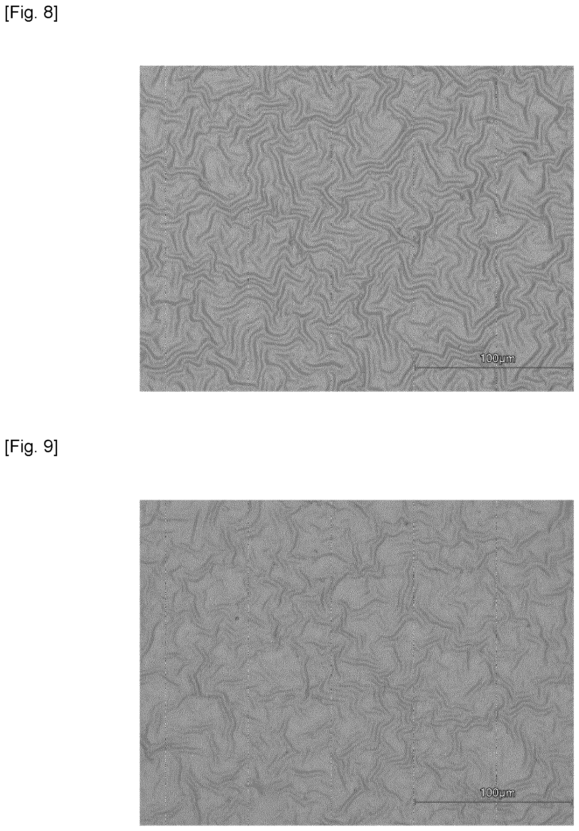

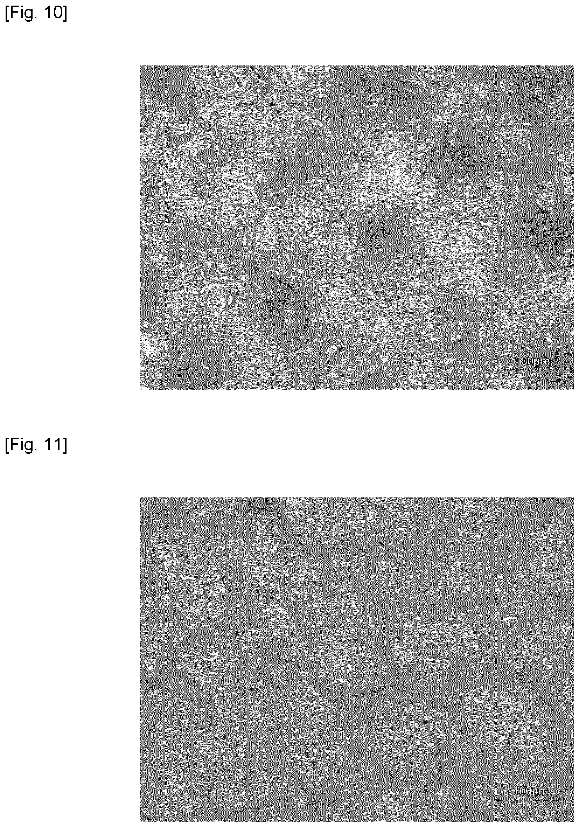

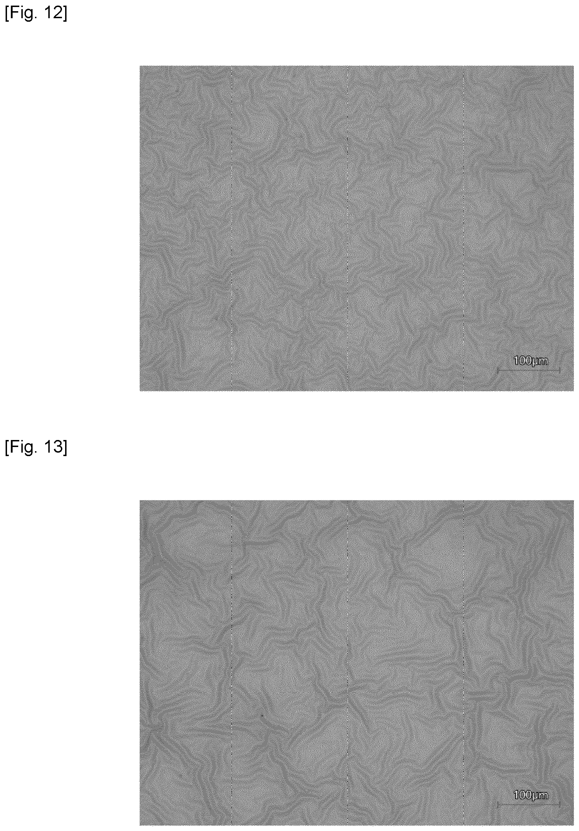

Figs. 7 to 13 are microscope images of the matte articles obtained in Example 1 and Comparative Example 1 to 6.

Industrial Applicability

The matte article of the present embodiment gives excellent matte effect visibility and texture and excels in a rough touch, and thus is suitably used for decorative members for various members in various applications, for example, interior members of buildings such as walls, ceilings, and floors, exterior members such as exterior walls, eaves ceilings, roofs, fences, and rails, or fixture or fitting members such as window frames, doors, door frames, railings, baseboards, trims, and moldings, general furniture such as chests, shelves, and desks, kitchen furniture such as dining tables, and sinks, surface decorative boards such as cabinets for home appliances and OA equipment, or vehicle interior or exterior members. In addition to the above decorative members used for buildings and the like, the matte article of the present embodiment can be used for packaging materials, antidazzle films for displays, whiteboards or blackboards, credit cards, cash cards, telephone cards, various types of cards such as various certificates, keyboards of various keyboards, windows, doors, transparent boards (e.g., window glass) for partitions, artificial leather, etc., as a single form, or in a laminated, composite, or combined form with another material(s) (e.g., an adherend).

Reference Signs List

1a: protrusion vertex (large Spc)
1b: protrusion vertex (small Spc)
2: convex portion
2a: convex portion (small Rsm)
2b: convex portion (large Rsm)
3: concave portion
10: Matte article
11: Matte layer
12: Base material
13: Decorative layer
13a: Colored layer
13b: Patterned layer
14: Adhesive layer
15: Transparent resin layer
16: Primer layer

Claims

1. A matte article comprising, on at least a part of a surface thereof, a surface shape with an Spc (arithmetic mean curvature of protrusion vertexes) of more than 4000 mm$^{-1}$ as specified in JIS B0601:2013 and an Rsm (average length of curve elements) of 30 $\mu$m or more as specified in JIS B0601:2013.

2. The matte article according to claim 1, wherein the surface shape has an Rz (maximum height), which is a peak and height parameter of a contour curve as specified in JIS B0601:2013, of 8.00 $\mu$m or more and 30.00 $\mu$m or less.

3. The matte article according to claim 1 or 2, wherein the surface shape has an Ra (arithmetic mean roughness), which is a parameter of a contour curve in a height direction as specified in JIS B0601:2013, of 1.00 $\mu$m or more and 5.50 $\mu$m or less.

4. The matte article according to any one of claims 1 to 3, comprising a matte layer, wherein the surface shape is formed on a surface of the matte layer.

5. The matte article according to any one of claims 1 to 4, wherein the surface of the matte layer forming the surface shape has an uneven shape composed of irregular wrinkles.

6. The matte article according to claim 5, wherein the irregular wrinkles are composed of a plurality of convex portions formed by a plurality of streak-shaped protrusions and a plurality of concave portions formed by being surrounded by the plurality of streak-shaped protrusions.

7. The matte article according to any one of claims 4 to 6, wherein the matte layer is made of a cured resin composition comprising a resin and a wrinkle formation stabilizer; the wrinkle formation stabilizer has an average particle size, an upper limit of which is 100% or less of a thickness of the matte layer or 30 $\mu$m or less, whichever is smaller; and the wrinkle formation stabilizer is comprised in an amount of 0.5 parts by mass or more based on 100 parts by mass of the resin.

8. The matte article according to any one of claims 1 to 7, comprising a base material.

9. The matte article according to claim 8, wherein the base material is in a sheet form.

10. The matte article according to claim 9, wherein the matte layer is provided over an entire surface of one side of the base material.

11. The matte article according to any one of claims 1 to 10, wherein the surface shape has a 60° gloss value of 10.0 or less.

[Fig. 1]

1 a

1 b

[Fig. 2]

2 a

2 b

3

3

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

**INTERNATIONAL SEARCH REPORT**

| International application No. |
| --- |
| **PCT/JP2022/015014** |

| A. | CLASSIFICATION OF SUBJECT MATTER |
| --- | --- |

*B32B 27/00*(2006.01)i; *B32B 27/18*(2006.01)i
FI:   B32B27/00 E; B32B27/18 Z

According to International Patent Classification (IPC) or to both national classification and IPC

| B. | FIELDS SEARCHED |
| --- | --- |

Minimum documentation searched (classification system followed by classification symbols)

B32B1/00-43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2005-089932 A (DAINIPPON PRINTING CO LTD) 07 April 2005 (2005-04-07)<br>claims 1-3, example 1 | 1-11 |
| X | JP 2005-313411 A (DAINIPPON PRINTING CO LTD) 10 November 2005 (2005-11-10)<br>claims 1-6, example 1 | 1-11 |
| P, X | WO 2022/054646 A1 (DAINIPPON PRINTING CO LTD) 17 March 2022 (2022-03-17)<br>claims 1-15, examples 1-2 | 1-11 |
| P, X | WO 2022/054645 A1 (DAINIPPON PRINTING CO LTD) 17 March 2022 (2022-03-17)<br>claims 1-14, examples 5-6 | 1-11 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 May 2022** | **17 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2022/015014** |

| Patent document cited in search report | | | Publication date (day/month/year) | Patent family member(s) | | | Publication date (day/month/year) |
|---|---|---|---|---|---|---|---|
| JP | 2005-089932 | A | 07 April 2005 | US 2007/0054145 A1 claims 5-10, example 6 WO 2006/022035 A1 KR 10-2006-0080207 A CN 1856620 A | | | |
| JP | 2005-313411 | A | 10 November 2005 | (Family: none) | | | |
| WO | 2022/054646 | A1 | 17 March 2022 | (Family: none) | | | |
| WO | 2022/054645 | A1 | 17 March 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000062081 A

- JP 2011073207 A